(19) Europäisches Patentamt
European Patent Office
Office européen des brevets

(11) **EP 3 862 936 A1**

(12) **EUROPEAN PATENT APPLICATION**

(43) Date of publication:
**11.08.2021 Bulletin 2021/32**

(51) Int Cl.:
***G06Q 10/04*** *(2012.01)*

(21) Application number: **20214957.1**

(22) Date of filing: **17.12.2020**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **05.02.2020 JP 2020018245**

(71) Applicant: **FUJITSU LIMITED**
**Kanagawa 211-8588 (JP)**

(72) Inventors:
• **HANDA, Satoshi**
**Kawasaki-shi, Kanagawa 211-8588 (JP)**
• **PARIZY, Matthieu**
**Kawasaki-shi, Kanagawa 211-8588 (JP)**
• **MATSUOKA, Hidetoshi**
**Kawasaki-shi, Kanagawa 211-8588 (JP)**

(74) Representative: **Haseltine Lake Kempner LLP**
**Cheapside House**
**138 Cheapside**
**London**
**EC2V 6BJ (GB)**

(54) **INFORMATION PROCESSING APPARATUS, RECORDING MEDIUM, INFORMATION PROCESSING METHOD, AND INFORMATION PROCESSING SYSTEM**

(57) A combinatorial optimization problem for acquiring a plurality of routes to be used by a traveling entity to visit a plurality of spot nodes and having a depot node as a starting point and end point of each of the routes is solved by a computer. The computer acquires a maximum number of spot nodes to be allocated to one route, determines the number of state variables to be used for formulating the combinatorial optimization problem based on the maximum number, generates, for the determined number of state variables, information on an objective function; and outputs the generated information on the objective function to a searching apparatus searching a ground state indicated by a set of the state variables included in the objective function.

FIG. 1

EP 3 862 936 A1

**Description**

FIELD

The embodiments discussed herein are related to an information processing apparatus, a recording medium, an information processing method, and an information processing system.

BACKGROUND

In order to solve a combinatorial optimization problem, the problem is converted to an objective function and a combination that minimizes or maximizes the objective function is searched from combinations of values of state variables included in the objective function. A combination of values of state variables that minimizes or maximizes the objective function corresponds to a ground state or an optimum solution expressed by a set of state variables. As a method for acquiring an approximate solution of a combinatorial optimization problem in a practical time, simulated annealing (SA) method or Markov chain Monte Carlo method such as a replica exchange method is applied.

A vehicle routing problem (VRP) is an example of a practical problem of combinatorial optimization problems. In a VRP, a plurality of routes for, by a traveling entity such as a haulage vehicle standing by at a specific location called a depot, transporting a demand to a spot such as a customer location or collecting a demand at a spot and returning to the depot again may be acquired in a cost-minimizing manner.

For example, a searching apparatus has been proposed that eventuates a delivery problem in an energy function, minimizes the energy function by SA method, and searches an optimum allocation of vehicles and order of delivery.

A system has been proposed that searches a division patrol path for patrolling locations within a division group acquired by dividing a plurality of locations by an arbitrary number N of divisions. By using a genetic algorithm and SA method, the proposed system searches division patrol paths simultaneously such that the costs of the division patrol paths for patrolling locations within each division group may be substantially equal.

A computer system has been proposed that determines locations of distribution facilities such that delivery target articles may be delivered to destinations within a delivery allowed time and that the number of distribution facilities may be lower.

As related art, for example, Japanese Laid-open Patent Publication Nos. 7-175504, 2007-241340, and 2004-272615 are disclosed.

In order to solve a VRP by, for example, SA method, a plurality of possible combinations of the numbers of spots to be visited in each route may be determined in advance based on a constraint condition applied to the problem, for example. Each of the combinations is acquired from, for example, a relationship between a constraint of a maximum carrying capacity of a haulage vehicle and weights of packages to be transported to spots, and a total number of spots belonging to the combination is equal to the number of all spots to be visited.

In this case, solving using, for example, SA method with a computer is performed on each of a plurality of objective functions corresponding to the plurality of acquired combinations, and the best solution among the plurality of solutions acquired for the plurality of objective functions is selected as a final solution. However, the solving is performed the number of times corresponding to the number of the plurality of objective functions. Thus, as the number of possible combinations of the numbers of spots to be visited in routes increases, the number of executions of solving disadvantageously increases.

According to an embodiment of one aspect of the invention, it is an object of the embodiments to provide an information processing apparatus, a recording medium, an information processing method and an information processing system that may reduce the number of executions of solving.

In order to solve a VRP by, for example, SA method, a plurality of possible combinations of the numbers of spots to be visited in each route may be determined in advance based on a constraint condition applied to the problem, for example. Each of the combinations is acquired from, for example, a relationship between a constraint of a maximum carrying capacity of a haulage vehicle and weights of packages to be transported to spots, and a total number of spots belonging to the combination is equal to the number of all spots to be visited.

In this case, solving using, for example, SA method with a computer is performed on each of a plurality of objective functions corresponding to the plurality of acquired combinations, and the best solution among the plurality of solutions acquired for the plurality of objective functions is selected as a final solution. However, the solving is performed the number of times corresponding to the number of the plurality of objective functions. Thus, as the number of possible combinations of the numbers of spots to be visited in routes increases, the number of executions of solving disadvantageously increases.

According to an embodiment of one aspect of the invention, it is an object of the embodiments to provide an information processing apparatus, a recording medium, an information processing method and an information processing system that may reduce the number of executions of solving.

SUMMARY

According to embodiments of one aspect of the invention, a combinatorial optimization problem for acquiring a plurality of routes to be used by a traveling entity to visit a plurality of spot nodes and having a depot node as a starting point and end point of each of the routes is solved by a computer. The computer acquires a maximum number of spot nodes to be allocated to one route, determines the number of state variables to be used for formulating the combinatorial optimization problem based on the maximum number, generates, for the determined number of state variables, information on an objective function; and outputs the generated information on the objective function to a searching apparatus searching a ground state indicated by a set of the state variables included in the objective function.

According to an embodiment of one aspect of the invention, the number of executions of solving may be reduced.

BRIEF DESCRIPTION OF DRAWINGS

The invention is described, by way of example only, with reference to the following drawings, in which:

FIG. 1 is a diagram illustrating a processing example of an information processing apparatus according to a first embodiment;
FIG. 2 is a diagram illustrating an example of hardware of an information processing system according to a second embodiment;
FIG. 3 is a diagram illustrating an example of a route;
FIG. 4 is a diagram illustrating a function example of the information processing apparatus;
FIG. 5 is a diagram illustrating a bit flip control example by an optimization apparatus;
FIG. 6 is a flowchart illustrating a first processing example by the information processing system;
FIG. 7 is a flowchart illustrating a second processing example by the information processing system;
FIG. 8 is a diagram illustrating a maximum-number-of-spot-nodes determination example in each route (part 1);
FIG. 9 is a diagram illustrating a maximum-number-of-spot-nodes determination example in each route (part 2);
FIG. 10 is a diagram illustrating a maximum-number-of-spot-nodes determination example in each route (part 3);
FIG. 11 is a diagram illustrating a maximum-number-of-spot-nodes determination example in each route (part 4);
FIG. 12 is a diagram illustrating a route calculation example (part 1);
FIG. 13 is a diagram illustrating a first example of a relationship between the number of iterations and the number of correct answer replicas;
FIG. 14 is a diagram illustrating a second example of the relationship between the number of iterations and the number of correct answer replicas;
FIG. 15 is a diagram illustrating a route calculation example (part 2); and
FIG. 16 is a flowchart illustrating a comparison example.

DESCRIPTION OF EMBODIMENTS

Embodiments will be described below with reference to drawings.

[First Embodiment]

A first embodiment will be described.

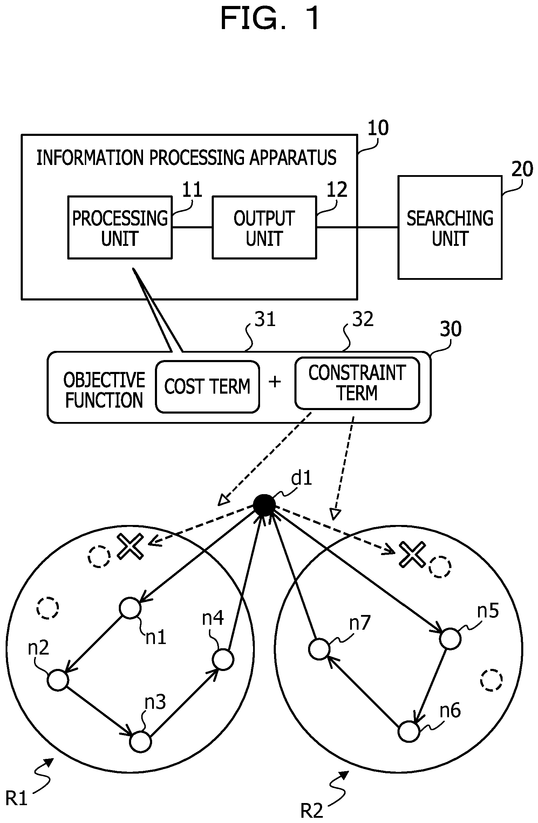

FIG. 1 is a diagram illustrating a processing example of an information processing apparatus according to the first embodiment.
An information processing apparatus 10 generates information on an objective function corresponding to a combinatorial optimization problem and outputs the generated information on the objective function. The combinatorial optimization problem is formulated by a quadratic form of binary variables. The objective function represents an energy in an Ising model and is also referred to as an "energy function" or an "evaluation function". An example of the combinatorial optimization problem is a capacitated VRP (CVRP).
The CVRP is a combinatorial optimization problem for acquiring a plurality of routes for traveling a plurality of spot nodes by a traveling entity and has a constraint regarding a capacity for the traveling entity. The capacity is determined based on a weight, a volume or an area, for example. An example of the constraint regarding the capacity is a maximum carrying capacity of a truck. A demand amount such as a weight of a package to be transported to a spot node or a weight of a package to be collected at the spot node is associated with the spot node. The starting point and end point of each route are a depot node. The number of a plurality of routes is determined based on the number of traveling entities, for example. For example, in a case where four trucks are available as the traveling entities, the number of routes is equal to "4". In each of the routes, at least one spot node is visited.

The information processing apparatus 10 includes a processing unit 11 and an output unit 12.

The processing unit 11 acquires the maximum number of spot nodes to be allocated to one route. The processing unit 11 may acquire the maximum number input to the information processing apparatus 10 by a user or may calculate the maximum number based on a capacity of a traveling entity and a demand amount of each spot node.

The processing unit 11 determines the number of state variables to be used for formulating a combinatorial optimization problem based on the acquired maximum number. Because of a characteristic of the objective function, which will be described below, a total of the maximum numbers of spot nodes to be allocated to routes is allowed to be higher than the number of all spot nodes to be travelled. The maximum number of spot nodes represents the maximum number of spot nodes to be allocated to a specific route.

The processing unit 11 configures such that the maximum number of spot nodes is equal to the acquired maximum number in at least one route and that the maximum number of spot nodes is equal to or lower than the maximum number in the other routes. For example, when the number of all spot nodes to be visited is "12", the total of the maximum number of spot nodes to be allocated to each route may be equal to or higher than "13". As an example, the processing unit 11 may uniformly handle a plurality of maximum numbers of spot nodes to be allocated to a plurality of routes as the acquired maximum number and may determine the number of state variables to be used for formulating the combinatorial optimization problem.

The processing unit 11 generates information on an objective function 30 with respect to the determined number of state variables. Each of the state variables in the objective function 30 is a binary variable having a value of 0 or 1, for example, and may be referred to as a "bit variable". A state of the Ising model is expressed by the values of the plurality of state variables. A set of values of the plurality of state variables may also be referred to as a state vector.

The objective function 30 includes a cost term 31 and a constraint term 32.

The cost term 31 represents a cost for visiting spot nodes by a traveling entity. The cost is a value to be minimized and is, for example, a total traveling distance or a total traveling cost.

The constraint term 32 represents limitation of traveling of the traveling entity to each of a plurality of spot nodes within a route after the traveling entity travels from a spot node to a depot node in the route. The constraint term 32 is expressed as a term that adds a relatively high penalty value to the objective function with respect to a change of the value of a state variable indicating that the traveling entity travels from a depot node to one spot node after returning to the depot node in each route.

The objective function 30 may include a constraint term other than the constraint term 32, such as a constraint term relating to a capacity of the traveling entity.

The output unit 12 outputs the generated information on the objective function 30 to a searching unit 20 that searches a ground state expressed by a set of state variables included in the objective function 30. The searching unit 20 performs search for a ground state by SA method, replica exchange method, quantum annealing method and so on based on the objective function 30.

For example, a case is considered in which spot nodes n1, n2, ... are to be visited in a plurality of routes including routes R1 and R2. The starting point and end point of each of the routes R1 and R2 are a depot node d1. The processing unit 11 acquires, for example, "6" as the maximum number of spot nodes to be allocated to one route. In this case, the processing unit 11 allocates the acquired maximum number "6" of spot nodes as a first maximum number of spot nodes of the first route R1. The processing unit 11 allocates, for example, "5" to the second route R2 as a second maximum number of spot nodes equal to or lower than the first maximum number of spot nodes.

It is assumed that a state that the spot nodes to be visited in the route R1 are determined as four spot nodes of n1, n2, n3 and n4 and the traveling entity returns from the spot node n4 to the depot node d1 is generated by the searching unit 20. In this case, there is the remaining number "2" (= 6 - 4) of spot nodes with respect to the first maximum number of spot nodes allocated to the route R1. However, in the searching unit 20, because of the constraint term 32, generation of the state in the route R1 indicating that the traveling entity travels from the depot node d1 to another spot node after returning from the spot node n4 to the depot node d1 is limited.

It is assumed that a state that the spot nodes to be visited in the route R2 are determined as three spot nodes of n5, n6 and n7 and the traveling entity returns from the spot node n7 to the depot node d1 is generated by the searching unit 20. In this case, there is the remaining number "2" (= 5 - 3) of spot nodes with respect to the second maximum number of spot nodes allocated to the route R2. However, in the searching unit 20, because of the constraint term 32, generation of the state in the route R2 indicating that the traveling entity travels from the depot node d1 to another spot node after returning from the spot node n7 to the depot node d1 is limited.

According to the information processing apparatus 10, the number of executions of solving may be reduced.

A plurality of possible combinations of the numbers of spot nodes to be visited in each route may be determined in advance based on a constraint condition applied to the problem. In the possible combinations, the number of spot nodes to be visited in each route is fixedly determined, and a total number in the all routes of the spot nodes to be visited in each of the routes is equal to the number of all spot nodes to be visited.

For example, in a case where the total number of spot nodes is "12" and the number of routes is "4", N (where N is an integer equal to or higher than 2) possible combinations of the number of spot nodes to be visited in the routes may be determined such as a first combination (4, 4, 3, 1), a second combination (4, 4, 2, 2) and so on with respect to capacities of the traveling entities and demand amounts at the spot nodes. In this case, N objective functions are generated for the N combinations, solution search by the searching unit 20 is executed for each of the objective functions, and the best solution of the solutions acquired with respect to the N objective functions is adopted as a final solution. Here, the term "solving" corresponds to one process starting from one initial state and being performed until a solution is acquired for one objective function. However, in this method, as the number of possible combinations of the number of spot nodes to be visited in routes increases, the number of objective functions to be solved increases, increasing the number of executions of the solving by the searching unit 20.

On the other hand, according to the information processing apparatus 10, the objective function 30 including the constraint term 32 is generated. Because of the constraint term 32, a total of the maximum numbers of spot nodes to be allocated to routes is allowed to be higher than the number of all spot nodes to be visited. This is because the constraint term 32 may limit the generation of the state that the number of routes increases in the searching unit 20. Thus, the N objective functions may be aggregated to and expressed by objective functions the number of which is lower than N. For example, in a case where the N objective functions are expressed by one objective function, the number of executions of solving may be reduced to 1/N, compared with the case where N objective functions are used.

As an example, it is assumed that, in a case where the number of all spot nodes is "12" and the number of routes is "4", the processing unit 11 acquires "5" as the maximum number of the spot nodes to be allocated to one route. In this case, the processing unit 11 may determine the combination of the number of spot nodes to be allocated to the routes as (5, 5, 5, 5) and determine the number of state variables in the objective function. For example, by using the constraint term 32, the problem may be formulated by the one objective function 30 relating to the state variables the number of which is based on the combination (5, 5, 5, 5), instead of the N objective functions corresponding to the N combinations (4, 4, 3, 1), (4, 4, 2, 2), ....

The processing unit 11 obtains the solution acquired based on the objective function 30 from the searching unit 20 and, with respect to the obtained solution, regards the fact that the traveling entity has returned to the depot node without reaching the maximum number of spot nodes in one route as reaching the end point of the route. The solution that may possibly be generated by the one objective function 30 includes all of solutions that may possibly be generated by the N objective functions for the N combinations (4, 4, 3, 1), (4, 4, 2, 2), .... Thus, the number of objective functions to be used for solution search may be reduced, and the number of executions of solving using the objective functions may be reduced.

The processing unit 11 determines a plurality of the maximum numbers of spot nodes to be allocated to a plurality of routes so as to further reduce the number of state variables of the objective function 30, thereby increasing the efficiency of the solution search by the searching unit 20. The processing unit 11 may adjust the number of state variables of the objective function 30 so as to increase the number of dummy depot nodes in accordance with a characteristic of a searching function by the searching unit 20 and may increase the speed of the solution search.

The processing unit 11 may be implemented by a central processing unit (CPU), a digital signal processor (DSP), an application-specific integrated circuit (ASIC), a field-programmable gate array (FPGA), or the like. The processing unit 11 may be a processor that executes a program. The "processor" referred to herein may include a set of a plurality of processors (multiprocessor).

The searching unit 20 may be implemented by hardware that executes, for example, SA method or replica exchange method by using a digital circuit or may be implemented by hardware that executes quantum annealing method. The searching unit 20 may be implemented by a processor such as a CPU included in the information processing apparatus 10.

The output unit 12 is implemented by an input/output (IO) interface that performs IO to and from a memory within the searching unit 20 or a memory within the information processing apparatus 10 to be referred by the searching unit 20. In a case where the searching unit 20 is implemented by another apparatus coupled over a network, the output unit 12 may be implemented by a communication interface such as a network interface card (NIC).

[Second Embodiment]

Next, a second embodiment will be described.

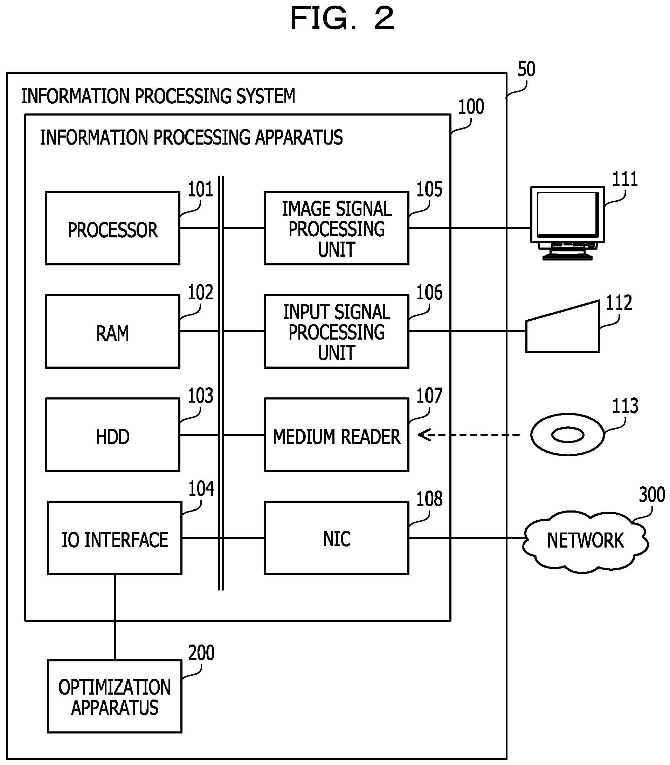

FIG. 2 is a diagram illustrating an example of hardware of an information processing system according to the second embodiment.

An information processing system 50 includes an information processing apparatus 100 and an optimization apparatus 200. The information processing apparatus 100 generates information on an objective function corresponding to a combinatorial optimization problem by formulating the combinatorial optimization problem and outputs the generated information on the objective function to the optimization apparatus 200. The information processing apparatus 100 includes a CPU 101, a random-access memory (RAM) 102, a hard disk drive (HDD) 103, an IO interface 104, an image signal processing unit 105, an input signal processing unit 106, a medium reader 107, and an NIC 108. The CPU 101 corresponds to the processing unit 11 according to the first embodiment. The IO interface 104 corresponds to the output unit 12 according to the first embodiment.

The CPU 101 is a processor that executes an instruction of a program. The CPU 101 loads at least a part of a program or data stored in the HDD 103 into the RAM 102 and executes the program. The CPU 101 may include a plurality of processor cores. The information processing apparatus 100 may include a plurality of processors. A set of the plurality of processors will be referred to as a "multiprocessor" or merely referred to as a "processor" in some cases.

The RAM 102 is a volatile semiconductor memory that temporarily stores the program to be executed by the CPU 101 and data used for an operation by the CPU 101. The information processing apparatus 100 may include memories of types other than the RAM and may include a plurality of memories.

The HDD 103 is a non-volatile storage device that stores data as well as software programs such as an operating system (OS), middleware, and application software. The information processing apparatus 100 may include other types of storage devices such as a flash memory and a solid-state drive (SSD) and may include a plurality of non-volatile storage devices.

The IO interface 104 is coupled to the optimization apparatus 200 and performs input and output of data to and from the optimization apparatus 200 in accordance with an instruction from the CPU 101. For example, in accordance with an instruction from the CPU 101, the IO interface 104 writes data in the RAM 102 to a register or a memory in the optimization apparatus 200 or reads data from the optimization apparatus 200 and writes it to the RAM 102. The IO interface 104 is, for example, a Peripheral Component Interconnect - Express (PCI-e).

The image signal processing unit 105 outputs an image to a display 111 coupled to the information processing apparatus 100 in accordance with an instruction from the CPU 101. As the display 111, any type of display such as a cathode ray tube (CRT) display, a liquid crystal display (LCD), a plasma display, or an organic electro-luminescence (OEL) display may be used.

The input signal processing unit 106 acquires an input signal from an input device 112 coupled to the information processing apparatus 100 and outputs the input signal to the CPU 101. As the input device 112, a pointing device such as a mouse, a touch panel, a touchpad, or a trackball, a keyboard, a remote controller, a button switch, or the like may be used. A plurality of types of input devices may be coupled to the information processing apparatus 100.

The medium reader 107 is a reading device that reads programs and data recorded in a recording medium 113. As the recording medium 113, for example, a magnetic disk, an optical disk, a magneto-optical disk (MO), a semiconductor memory, or the like may be used. The magnetic disk includes a flexible disk (FD) or an HDD. The optical disk includes a compact disk (CD) or a digital versatile disk (DVD).

The medium reader 107 copies, for example, the program and data read from the recording medium 113 to another recording medium such as the RAM 102 or the HDD 103. The read program is executed by, for example, the CPU 101. The recording medium 113 may be a portable recording medium or may be used to distribute the program and data. The recording medium 113 and the HDD 103 may be referred to as a computer-readable recording medium.

The NIC 108 is coupled to a network 300 and is an interface that communicates with another computer via the network 300. For example, the NIC 108 is coupled to a communication device such as a switch or a router included in the network 300 via a cable.

The optimization apparatus 200 is an accelerator that performs, by hardware, search for a ground state by SA method or replica exchange method based on information on an objective function. The optimization apparatus 200 may be referred to as an Ising machine, an Ising optimization apparatus or the like. The optimization apparatus 200 may be hardware that performs search for a ground state by quantum annealing method. The optimization apparatus 200 is an example of the searching unit 20 according to the first embodiment. However, instead of the optimization apparatus 200, the CPU 101 executes predetermined software to implement the function of the searching unit 20 that executes SA method, replica exchange method, simulated quantum annealing (SQA) method or the like.

According to the second embodiment, a CVRP is an example of a combinatorial optimization problem. E-n13k4 is an example of a standard problem of the CVRP. In the notation of E-n13k4, the number "13" in "n13" indicates that there are one depot and twelve spots. The number "4" in "k4" indicates that the number of vehicles that are traveling entities is four. Because one route is associated with one vehicle, the number of routes is four. The vehicles are trucks in the following description.

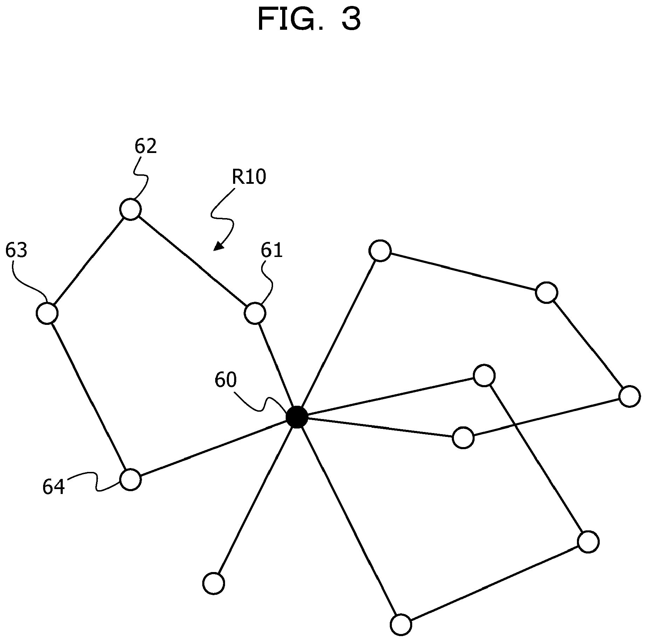

FIG. 3 is a diagram illustrating an example of a route.

A depot node 60 is a node representing a depot being a starting point and end point of the route. Spot nodes 61, 62, 63 and 64 are nodes representing spots such as a customer location. A route R10 is an example of one route coupling the depot node 60 and the spot nodes 61, 62, 63 and 64. FIG. 3 also illustrates other three routes coupling the depot node 60 and other spot nodes. One or more spots belong to one route.

Each spot is represented by an index j. It is assumed that a demand amount of the spot j is $d_j$. The demand

amount is a weight of a package to be transported or to be collected. In the CVRP, a constraint of a maximum carrying capacity is applied to a truck that is a traveling entity. It is assumed that the maximum carrying capacities of the trucks are equal. The maximum carrying capacity of the truck is represented by Q. In the CVRP, costs between spots are given, and a plurality of routes is determined so as to minimize the total of the costs. As the demand amount, a condition, such as a volume or an area of a package, other than a weight of the package to be delivered by the truck may be considered. As the cost, a traveling distance, a traveling cost and a traveling time, for example, may be considered.

The CVRP has the following constraint conditions. (Constraint Condition A) The total value of the demand amounts $d_j$ belonging to one route is equal to or lower than the maximum carrying capacity Q. (Constraint Condition B) At all times, the truck visits one spot or the depot at the same time. (Constraint Condition C) All spots are visited only once by the truck. (Constraint Condition D) The starting point and end point of each route are the depot.

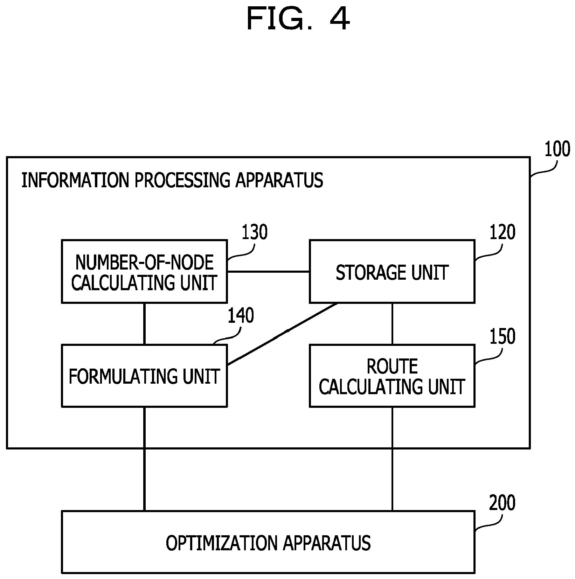

FIG. 4 is a diagram illustrating a function example of the information processing apparatus.

The information processing apparatus 100 has a storage unit 120, a number-of-node calculating unit 130, a formulating unit 140, and a route calculating unit 150. The storage unit 120 is implemented by using a storage area of the RAM 102 or the HDD 103. The number-of-node calculating unit 130, the formulating unit 140 and the route calculating unit 150 are implemented by the CPU 101.

The storage unit 120 stores data to be used for processing in the number-of-node calculating unit 130, the formulating unit 140 and the route calculating unit 150.

The number-of-node calculating unit 130 determines the maximum number of spot nodes, for example, the maximum number of spots to be allocated to each route based on input instance information. The instance information is information indicating details of a problem such as the maximum carrying capacity of the trucks, the demand amounts of spots, the number of routes (for example, the number of allocated trucks), the number of spots, and costs between spots in the CVRP. Because of a characteristic of the objective function, which will be described below, a total in all routes of the maximum numbers of spot nodes to be allocated to routes is allowed to be higher than the number of all spot nodes.

The formulating unit 140 determines the number of state variables to be used for formulating the CVRP based on the maximum numbers of spot nodes allocated to the routes determined by the number-of-node calculating unit 130. The formulating unit 140 generates information on an objective function from the given instance information by using the determined number of state variables. The objective function may include various constraint terms. The constraint term may also be referred to as a penalty term. The information on the objective function is generated as a file including a weight coefficient, a bias value and a constant between variables included in the objective function, for example. The formulating unit 140 outputs the generated information on the objective function to the optimization apparatus 200 and causes the optimization apparatus 200 to execute search for a ground state based on the objective function.

The route calculating unit 150 obtains, as a solution, a result of the ground state search from the optimization apparatus 200. The solution obtained from the optimization apparatus 200 is acquired as a bit string. The route calculating unit 150 converts the bit string to information in a form easily understandable by a user, such as an image illustrating routes as in FIG. 3 or an image having names of spots arranged in order of visiting for each route, and outputs the converted information. For example, the route calculating unit 150 displays the information such as an image generated by the conversion on the display 111 or transmits it to another computer over the network 300.

The optimization apparatus 200 performs search for a ground state by SA method or replica exchange method based on the objective function.

An Ising-type objective function E(x) is defined by the following Expression (1), for example. In the expression, a state represented by a plurality of state variables or a state vector is represented by "x" without a suffix.

$$E(x) = -\sum_{\langle i,j \rangle} W_{ij} x_i x_j - \sum_i b_i x_i \qquad (1)$$

A first term in the right side of Expression (1) is acquired by integrating a product of values of two state variables and a coupling coefficient without omission and duplication for all combinations of two state variables that are selectable from all state variables. $X_i$ is an i-th state variable. $X_j$ is a j-th state variable. A coupling coefficient $W_{ij}$ indicates a strength of coupling or a weight between the i-th state variable and the j-th state variable. For a matrix $W = \{W_{ij}\}$, there are many cases where $W_{ij} = W_{ji}$ and $W_{ii} = 0$. A suffix i added to a variable, such as the state variable $x_i$, is identification information of the variable and is referred to as an index.

A second term in the right side of Expression (1) is a sum of products of respective bias values of all of the state variables and values of the state variables. $b_i$ indicates a bias value for an i-th state variable.

For example, "-1" of a spin in the Ising model corresponds to a value "0" of the state variable. "+1" of the spin in the Ising model corresponds to a value "1" of the state variable. With regard to the CVRP above, the state variable may be associated with a spot or the depot at a certain point in time, and not visiting the spot or the depot may be associated with the value "0" of the state variable, and visiting the spot or the depot may be associated with the value "1" of the state variable.

In a case where a value of the state variable $x_i$ changes to become $1-x_i$, an increase amount of the state variable $x_i$ is represented as $\delta x_i = (1 - x_i) - x_i = 1 - 2x_i$. Therefore, an energy change $\Delta E_i$ in response to a change of the state variable $x_i$ for the objective function E(x) is represented by Expression (2).

$$
\begin{aligned}
\Delta E_i &= E(x)\Big|_{x_i \to 1 - x_i} - E(x) \\
&= -\delta x_i \left( \sum_j W_{ij} x_j + b_i \right) \\
&= -\delta x_i h_i \\
&= \begin{cases} -h_i & for \ x_i = 0 \to 1 \\ +h_i & for \ x_i = 1 \to 0 \end{cases}
\end{aligned}
\tag{2}
$$

$h_i$ is referred to as a local field and is represented by Expression (3).

$$
h_i = \sum_j W_{ij} x_j + b_i
\tag{3}
$$

A change amount $\delta h_i^{(j)}$ of the local field $h_i$, in a case where the state variable $x_j$ is changed, is represented by Expression (4).

$$
\delta h_i^{(j)} = \begin{cases} +W_{ij} & for \ x_j = 0 \to 1 \\ -W_{ij} & for \ x_j = 1 \to 0 \end{cases}
\tag{4}
$$

The optimization apparatus 200 holds the local field $h_i$ and adds the change amount $\delta h_i^{(j)}$ to $h_i$ in a case where the value of the state variable $x_j$ changes, thereby obtaining $h_i$ corresponding to a state after the bit inversion.

The optimization apparatus 200 uses Metropolis method or Gibbs method in searching a ground state to determine whether or not to allow a state transition (change in a value of the state variable $x_i$) in which an energy change is $\Delta E_i$. In other words, for example, the optimization apparatus 200 stochastically allows not only a state where energy is lowered but also transition to a state where energy is increased in a neighbor search for searching for transition from a certain state to another state where energy is lower than energy of the state. For example, a probability A that accepts a change in a value of a state variable of the energy change $\Delta E$ is represented by Expression (5).

$$
A(\Delta E) = \begin{cases} \min\left[1, \exp(-\beta \cdot \Delta E)\right] & Metropolis \\ 1/\left[1 + \exp\left(\beta \cdot \Delta E\right)\right] & Gibbs \end{cases}
\tag{5}
$$

An inverse temperature $\beta$ is a reciprocal ($\beta = 1/T$) of a temperature T. A min operator indicates that a minimum value of an argument is taken. Therefore, in a case where Metropolis method is used and the energy change $\Delta E$ satisfies Expression (6) for a uniform random number u ($0 < u \le 1$), the change in the value of the state variable is allowed.

$$
\ln(u) \times T \le -\Delta E
\tag{6}
$$

Profile information of a temperature to be used by the optimization apparatus 200 may be set for the optimization apparatus 200 by the information processing apparatus 100 in accordance with a problem.

In order to attempt an increase of the speed of arithmetic operations, the optimization apparatus 200 may control changes of the values of the state variables, for example, bit flips in the following manner.

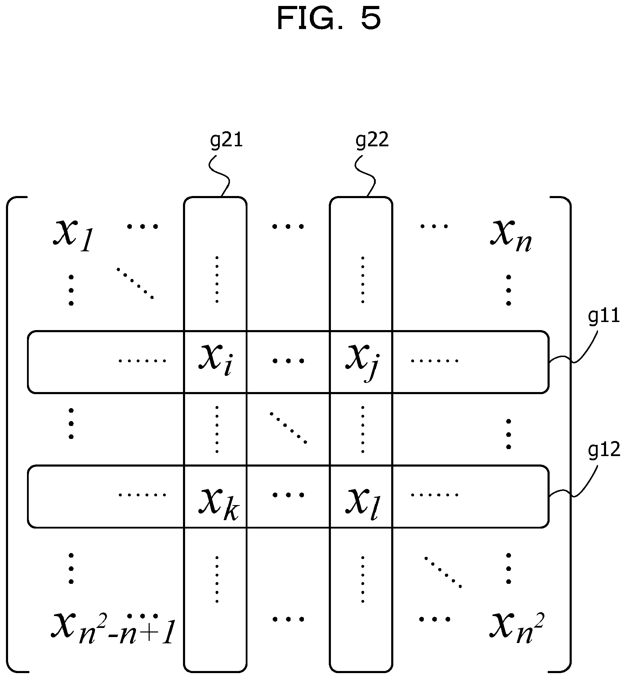

FIG. 5 is a diagram illustrating a bit flip control example by the optimization apparatus.

In a case where Markov chain Monte Carlo method is used, it may be considered that the state variables $x_i$ are flipped one by one as in Expression (7). i is an index indicating a state variable to be flipped. An energy change $\Delta E_i$ is represented by Expression (8). A change $\Delta h_m$ of the local field corresponding to the state variable $x_m$ is represented by Expression (9). m is an index indicating an arbitrary state variable.

$$x_i \rightarrow x_i + \Delta x_i \qquad (7)$$

$$\Delta E_i = -h_i \cdot \Delta x_i \qquad (8)$$

$$\Delta h_m = W_{m,i} \cdot \Delta x_i \qquad (9)$$

In a combinatorial optimization problem, a constraint condition referred to as "1-Hot constraint" may be applied. 1-Hot constraint is a constraint that "there is only one variable having a value "1" in a certain set of state variables". For example, FIG. 5 illustrates $n^2$ (where n is an integer equal to or higher than 2) state variables $x_1$, $x_2$, ... in n rows and n columns. However, a relationship of (the number of state variables) $\neq n^2$ may be allowed. Groups g11 and g12 indicate examples of groups of state variables corresponding to rows. Groups g21 and g22 indicate examples of groups of state variables corresponding to columns.

When 1-Hot constraint is applied to groups of state variables corresponding to rows, a sum of the state variables of each row is equal to 1. For example, a sum of the state variables belonging to the group g11 is equal to 1. A sum of the state variables belonging to the group g12 is equal to 1. Alternatively, when 1-Hot constraint is applied to groups of state variables corresponding to columns, a sum of the state variables of each column is equal to 1. For example, a sum of the state variables belonging to the group g21 is equal to 1. A sum of the state variables belonging to the group g22 is equal to 1.

A first example of 1-Hot constraint is a constraint that "one truck stays at one spot or the depot at a certain time". Alternatively, a second example of 1-Hot constraint is a constraint that "one spot is visited by a truck only once".

1-Hot constraint is represented as a state having a relatively high energy in an objective function. Because of this, when a transition of one state variable, for example, one bit flip is only repeated, it becomes difficult to shift from a certain state to another state through a state that does not satisfy 1-Hot constraint, reducing the possibility of reach to a better solution. Accordingly, the optimization apparatus 200 performs bit-flip control called "1-Way 1-Hot" (hereinafter, "1W1H") and "2-Way 1-Hot" (hereinafter, "2W1H").

According to 1W1H, values of two state variables are changed by one operation so as to satisfy one 1-Hot constraint. In other words, for example, 2 bit flips as represented in Expression (10) are acquired. i, j are a set of indices indicating a set of state variables to be flipped. An energy change $\Delta E_j$ is represented by Expression (11). A change $\Delta h_m$ of the local field corresponding to the state variable $x_m$ is represented by Expression (12).

$$x_i : 1 \rightarrow 0, \quad x_j : 0 \rightarrow 1 \qquad (10)$$

$$\Delta E_j = h_i - h_j \qquad (11)$$

$$\Delta h_m = -W_{m,i} + W_{m,j} \qquad (12)$$

According to 2W1H, values of four state variables are changed by one operation so as to satisfy two 1-Hot constraints. In other words, for example, 4 bit flips as represented in Expression (13) are acquired. i, j, k, l are a set of indices indicating a set of state variables to be flipped. FIG. 5 illustrates an example of a set of state variables corresponding to indices i, j, k, l. 2W1H is usable in a case where the number of state variables is equal to $n^2$ and where state variables of each row of n rows and each column of n columns are grouped as a group under 1-Hot constraint. An energy change $\Delta E_j$ in this case is represented by Expression (14). A change $\Delta h_m$ of the local field corresponding to the state variable

$x_m$ is represented by Expression (15).

$$x_i : 1 \to 0, \quad x_j : 0 \to 1, \quad x_k : 0 \to 1, \quad x_l : 1 \to 0 \tag{13}$$

$$\Delta E_j = (h_i + h_l) - (h_j + h_k) - (W_{il} + W_{jk}) \tag{14}$$

$$\Delta h_m = W_{mj} + W_{mk} - (W_{mi} + W_{ml}) \tag{15}$$

Next, a processing procedure of the information processing system 50 is described. First, a case where search with 1 bit flip or 1W1H (2 bit flips) is performed will exemplarily be described as a first processing example.

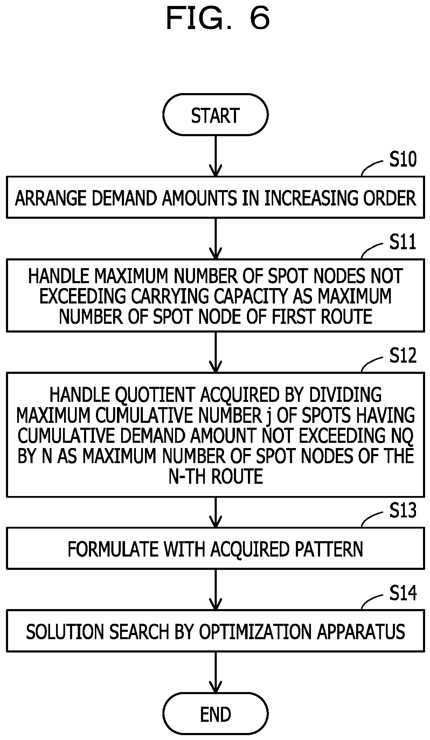

FIG. 6 is a flowchart illustrating a first processing example by the information processing system.

(S10) The number-of-node calculating unit 130 arranges, in increasing order, the demand amounts of the spots included in the input instance information.

(S11) The number-of-node calculating unit 130 handles the maximum number of spot nodes not exceeding the carrying capacity of the truck as the maximum number of spot nodes of a first route. The maximum number of spot nodes is a maximum number of spot nodes that may be visited in a corresponding route.

(S12) The number-of-node calculating unit 130 handles a quotient acquired by dividing the maximum cumulative number j of spots having a cumulative demand amount not exceeding NQ by N as the maximum number of spot nodes of the N-th route. The number-of-node calculating unit 130 determines the maximum number of spot nodes for all routes and generates a pattern of the maximum numbers of spot nodes for the routes. When the maximum numbers of spot nodes are determined in this manner, the number of spot nodes visited in the N-th route is equal to or lower than the maximum number of spot nodes corresponding to the N-th route. The maximum number of spot nodes of a first route is a maximum value of the maximum numbers of spot nodes of the N routes.

(S13) The formulating unit 140 formulates with the pattern acquired in step S12. In other words, for example, the formulating unit 140 determines the number of state variables based on the pattern and formulates the CVRP for the determined number of state variables. The formulating unit 140 generates information on the objective function through the formulating. The formulating unit 140 adds, to the objective function, a constraint term indicating "traveling of a truck to each of a plurality of spot nodes is limited after the truck travels from a spot node to the depot node in each route". In the first processing example, the constraint term is a constraint term indicating "after the truck travels from a spot node to the depot node in each route, the truck stays at the depot node within the route". The information on the objective function is quadratic unconstrained binary optimization (QUBO) data of the Ising model represented by Expression (1) and includes information on $\{W_{ij}\}$, $\{b_i\}$ and the constant term in Expression (1).

When 1W1H is used, the formulating unit 140 gives a label indicating a group subject to 1-Hot constraint to each state variable. For example, the formulating unit 140 handles, as the label, identification information of a group to which corresponding state variables belong, such as the group g11 or g12 in FIG. 5, and gives it to a state variable. This is for designation to the optimization apparatus 200 such that 2 bit flips are to be performed between state variables having the label of the same group.

(S14) The formulating unit 140 outputs the information on the objective function to the optimization apparatus 200 and causes the optimization apparatus 200 to perform solution search based on the information on the objective function. The information to be output from the formulating unit 140 to the optimization apparatus 200 may include information on the label above and information indicating an initial state of the search in addition to the information on the objective function.

The optimization apparatus 200 executes solution search by SA method or replica exchange method and outputs the solution acquired by the solution search to the route calculating unit 150. The route calculating unit 150 receives the solution from the optimization apparatus 200, converts the solution to a form easily understandably by a user and causes the display 111 to display details of the converted solution or transmits them to another computer.

Next, a case where search with 2W1H (4 bit flips) is performed will exemplarily be described as a second processing example.

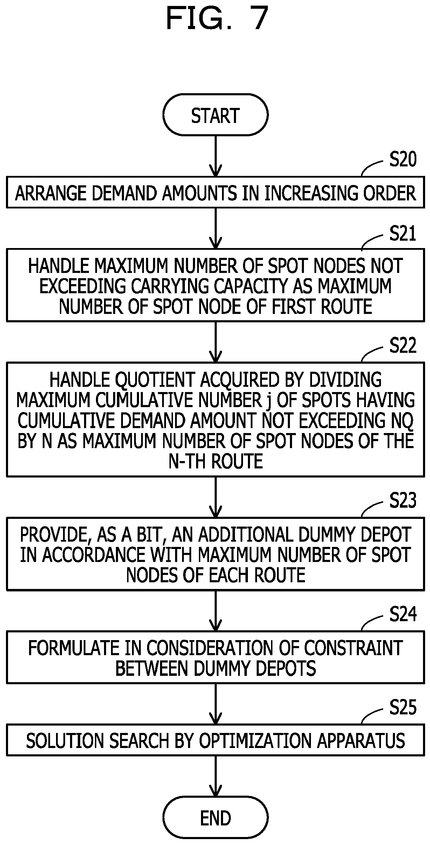

FIG. 7 is a flowchart illustrating a second processing example by the information processing system.

(S20) The number-of-node calculating unit 130 arranges, in increasing order, the demand amounts of the spots included in the input instance information.

(S21) The number-of-node calculating unit 130 handles the maximum number of spot nodes not exceeding the carrying capacity of the truck as the maximum number of spot nodes of a first route.

(S22) The number-of-node calculating unit 130 handles a quotient acquired by dividing the maximum cumulative number j of spots having a cumulative demand amount not exceeding NQ by N as the maximum number of spot nodes of the Nth route. The number-of-node calculating unit 130 determines the maximum number of spot nodes for all routes and generates a pattern of the maximum numbers of spot nodes for the routes.

(S23) The formulating unit 140 provides, as a bit, an additional dummy depot in accordance with the maximum number of spot nodes of each route acquired in step S22. In other words, for example, the formulating unit 140 adds a state variable corresponding to a dummy depot node referred to as a dummy depot such that the number of state variables is equal to a square ($M^2$) of the integer M in addition to the state variables corresponding to the spot nodes. All of such dummy depots are handled as depots. The integer M is a sum of the maximum numbers of spot nodes of the routes.

(S24) The formulating unit 140 formulates with the pattern acquired in step S22 in consideration of the constraint between dummy depots. In other words, for example, the formulating unit 140 formulates the CVRP for $M^2$ state variables. The formulating unit 140 generates information on the objective function through the formulating. The formulating unit 140 adds, to the objective function, a constraint term indicating "traveling of a truck to each of a plurality of spot nodes is limited after the truck travels from a spot node to the depot node in each route". In the second processing example, the constraint term is a constraint term indicating "after the truck travels from a spot node to a dummy depot in each route, the truck visits another dummy depot within the route". The information on the objective function is QUBO data of the Ising model represented by Expression (1) and includes information on $\{W_{ij}\}$, $\{b_i\}$ and the constant term of Expression (1).

The formulating unit 140 gives a label indicating a group subject to 1-Hot constraint to each state variable. For example, the formulating unit 140 handles, as the label, identification information of a group to which corresponding state variables belong, such as the group g11, g12, g21 or g22 in FIG. 5, and gives it to the state variables. This is for designation to the optimization apparatus 200 such that 4 bit flips are performed in accordance with combinations of 2 bit flips in the row and column directions in FIG. 5 by performing 2 bit flips between state variables having the label of the same group.

(S25) The formulating unit 140 outputs the information on the objective function to the optimization apparatus 200 and causes the optimization apparatus 200 to perform solution search using 2W1H based on the information on the objective function. The information to be output from the formulating unit 140 to the optimization apparatus 200 may include information on the label above and information indicating an initial state of the search in addition to the information on the objective function.

The optimization apparatus 200 executes solution search by SA method or replica exchange method and outputs the solution acquired by the solution search to the route calculating unit 150. The route calculating unit 150 receives the solution from the optimization apparatus 200, converts the solution to a form easily understandably by a user and causes the display 111 to display details of the converted solution or transmits them to another computer.

Next, an example of determination of the maximum number of spot nodes in each route in steps S10 to S12 in the first processing example and steps S20 to S22 in the second processing example above will be described.

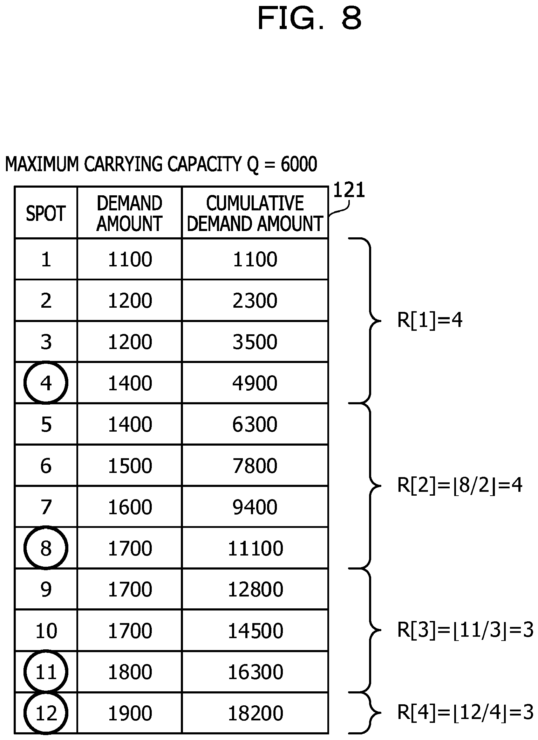

FIG. 8 is a diagram illustrating a maximum-number-of-spot-nodes determination example in each route (part 1).

As a CVRP, E-n13k4 will exemplarily be described. However, the number-of-node calculating unit 130 may also determine the maximum number of spot nodes of each route in other kinds of problem such as E-n22k4. In the example in FIG. 8, it is assumed that the maximum carrying capacity Q of the truck is Q = 6000.

First, the route calculating unit 150 arranges 12 spot nodes in increasing order of demand amounts, for example, in ascending order of demand amounts. A cumulative demand amount is acquired in increasing order of the demand amounts. A table 121 illustrates cumulative demand amounts for the 12 spot nodes. The table 121 is stored in the storage unit 120.

The table 121 includes items of spot, demand amount and cumulative demand amount. Under the item of spot, the cumulative number of spots acquired by counting the spot nodes in ascending order of demand amounts is registered. Under the item of demand amount, the demand amount at a spot node is registered. Under the item of cumulative demand amount, a cumulative demand amount acquired by accumulating the demand amounts in ascending order of the demand amounts is registered.

The number-of-node calculating unit 130 acquires the maximum number R[N] of nodes of an N-th route by using Expression (16). In this case, N is an index indicating a route.

$$R[N] = \left\lfloor \frac{j}{N} \right\rfloor \qquad (16)$$

The cumulative number j of spots is a maximum number of spots having a cumulative demand amount not exceeding $N \times Q$. The cumulative number j of spots may be referred to as a cumulative number j of spot nodes. Expression (16) indicates that the integer part of the quotient acquired by dividing j by N is R[N].

In the example in FIG. 8, the maximum cumulative number j of spots having a cumulative demand amount not exceeding $1 \times Q = 6000$ for N = 1 is j = 4. Therefore, R[1] = 4. R[1] corresponds to the maximum number of spot nodes in one route. The maximum number of spot nodes in other routes is equal to or lower than R[1].

Subsequently, the maximum cumulative number j of spots having a cumulative demand amount not exceeding $2 \times Q = 12000$ for N = 2 is j = 8. Therefore, R[2] = 4.

The maximum cumulative number j of spots having a cumulative demand amount not exceeding $3 \times Q = 18000$ for N = 3 is j = 11. Therefore, R[3] = 3.

The maximum cumulative number j of spots having a cumulative demand amount not exceeding $4 \times Q = 24000$ for N = 4 is j = 12. Therefore, R[4] = 3.

In this case, a set of the maximum numbers of spot nodes for the routes, for example, the pattern of the maximum numbers of spot nodes is (4, 4, 3, 3).

Arranging R[1], R[2], ..., R[N] in increasing order of demand amounts produces a monotone decreasing sequence like $R[1] \geq R[2] \geq ... \geq R[N]$. Because, for the N-th route, R[N] higher than the number acquired by dividing j by N contradicts the monotone decreasing sequence, R[N] may be acquired by using Expression (16).

The pattern (4, 4, 3, 3) contains all of possible patterns (4, 4, 3, 1), (4, 4, 2, 2), (4, 3, 3, 2), (3, 3, 3, 3) of the numbers of spot nodes for the routes under the conditions in FIG. 8. The term "possible pattern" refers to an executable combination of the numbers of spot nodes to be visited in routes and may be acquired from, for example, a relationship between a constraint of the maximum carrying capacities of trucks and weights of packages to be transported to the spots. In the possible pattern, the number of spots to be visited in each route is fixedly determined, and a total number in the all routes of the spots to be visited in each of the routes is equal to the number of all spots to be visited.

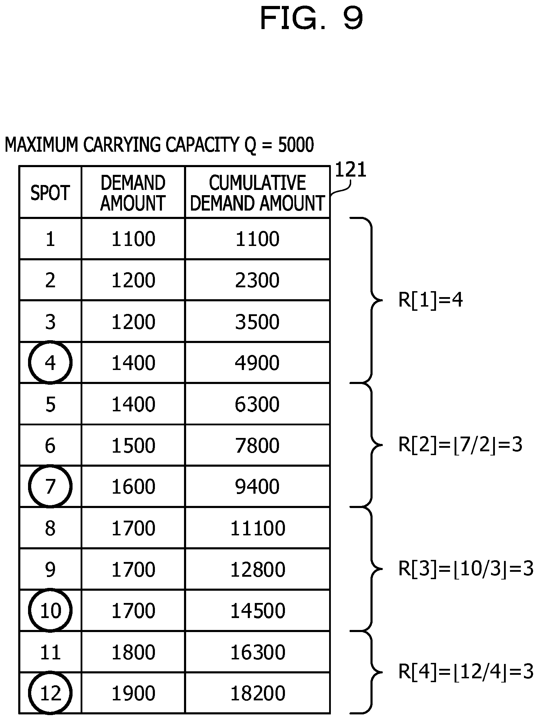

FIG. 9 is a diagram illustrating a maximum-number-of-spot-nodes determination example in each route (part 2).

FIG. 9 exemplarily illustrates a case with Q = 5000. The other conditions are the same as those of the example in FIG. 8.

In this case, j = 4 for N = 1. Therefore, R[1] = 4. j = 7 for N = 2. Therefore, R[2] = 3. j = 10 for N = 3. Therefore, R[3] = 3. j = 12 for N = 4. Therefore, R[4] = 3. In this case, a set of the maximum numbers of spot nodes for the routes, for example, the pattern of the maximum numbers of spot nodes is (4, 3, 3, 3).

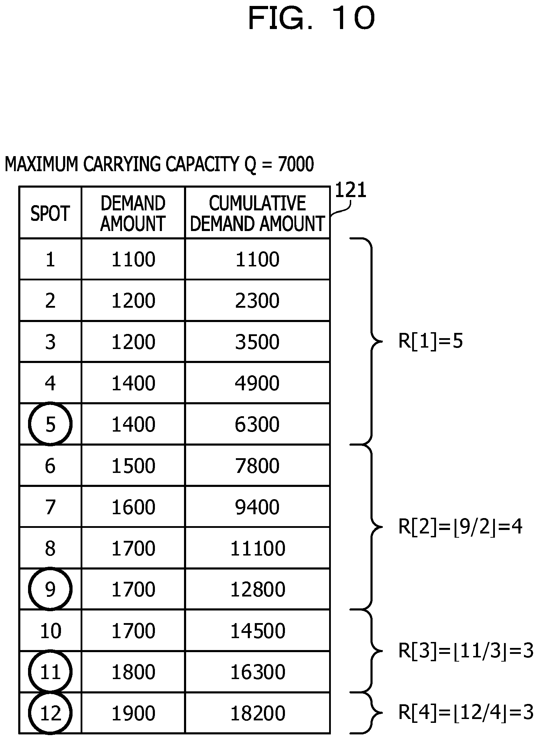

FIG. 10 is a diagram illustrating a maximum-number-of-spot-nodes determination example in each route (part 3).

Also when the total of demand amounts at all spots is lower than the truck carrying capacity $Q \times$ (a number lower than the total number of routes), the maximum number of spot nodes of each route may be calculated in the same manner as in FIGs. 8 and 9. In other words, for example, it corresponds to a case where one route K (K $\neq$ the total number k of routes) exists, and Expression (17) is satisfied for K.

$$K \times Q \geq \sum d \qquad (17)$$

In this case, when the number of routes, for example, the number of trucks is determined in advance as a condition, one truck travels at least one route. If Expression (17) is satisfied at the K-th route, the number-of-node calculating unit 130 may change the way of selecting spots such that the remaining routes may include at least one spot.

Referring to FIG. 10, a case is considered where Q = 7000 and the other conditions are the same as those of the example in FIG. 8.

In the example in FIG. 10, j = 5 for N = 1. Therefore, R[1] = 5. j = 9 for N = 2. Therefore, R[2] = 4.

j = 11 for N = 3. However, j = 12 when the same method as those in FIGs. 8 and 9 is used. On the other hand, because N = K < k and $K \times Q = 3 \times 7000 = 21000 \geq \Sigma d = 18200$, j = 12 - 1 = 11 such that at least one spot node is allocated to the remaining N = 4th route. With respect to j, "1" subtracted from the number "12" of spot nodes is the number of remaining routes after the third route. Therefore, R[3] = 3. j = 12 for N = 4. Therefore, R[4] = 3.

In this case, a set of the maximum numbers of spot nodes to be allocated to the routes, for example, the pattern of the maximum numbers of spot nodes is (5, 4, 3, 3).

On the other hand, the pattern of the maximum numbers of spot nodes acquired by the same method as those of FIGs. 8 and 9 in the example in FIG. 10 is (5, 4, 4, 3). By reducing the maximum number of spot nodes included in a pattern as in the method in FIG. 10, an increase of the number of state variables to be used for the formulating may be suppressed.

Other methods may be considered for determining the maximum number of spot nodes to be allocated to each route. For example, the number-of-node calculating unit 130 in the example of the problem E-n13k4 in FIG. 8 may determine the maximum number of spot nodes for the first route as 4 and also uniformly allocate the maximum number "4" of spot nodes to the second and subsequent routes to produce a pattern (4, 4, 4, 4).

Alternatively, the number-of-node calculating unit 130 may enumerate all of a plurality of possible patterns of the numbers of spot nodes for routes. The number-of-node calculating unit 130 may determine one pattern indicating the maximum numbers of spot nodes for routes by combining the maximum values of the routes based on the enumerated plurality of patterns. More specifically, for example, the operation is performed in the following manner.

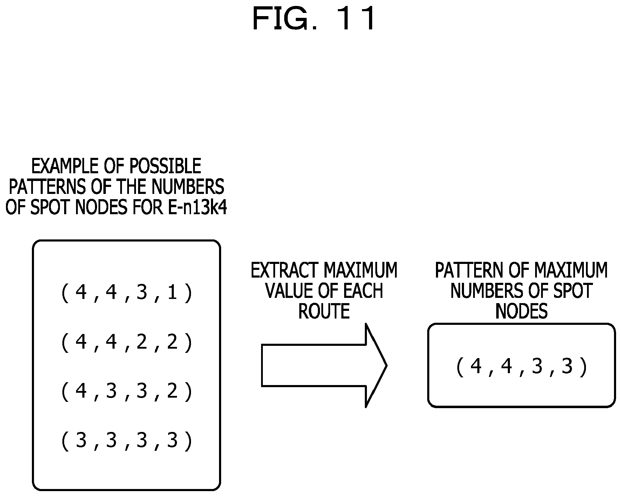

FIG. 11 is a diagram illustrating a maximum-number-of-spot-nodes determination example in each route (part 4).

When demand amounts of spots are arranged in increasing order, the number-of-node calculating unit 130 acquires all combinations of the numbers of spots not exceeding the maximum carrying capacities of trucks. The number-of-node calculating unit 130 enumerates all of combinations having the number of spots equal to or lower than the number of spots acquired for each of the routes where the total is equal to the total number of spot nodes. The combinations acquired in this manner correspond to the possible patterns of the numbers of spot nodes.

For example, the number-of-node calculating unit 130 may enumerate possible patterns of the numbers of spot nodes (4, 4, 3, 1), (4, 4, 2, 2), (4, 3, 3, 2), (3, 3, 3, 3) for the total number "12" of spot nodes in E-n13k4. In this case, the number-of-node calculating unit 130 may extract maximum values in the routes based on the enumerated plurality of patterns and determine one pattern (4, 4, 3, 3) of the maximum number of spot nodes by combining the maximum values.

However, in order to omit unnecessary search by the optimization apparatus 200 and increase the efficiency of the search, it is preferable to reduce the number of state variables by reducing the total of the numerical values belonging to the pattern by the information processing apparatus 100. For example, by using the methods in FIGs. 8 to 10, the number of state variables may be reduced more than the method in FIG. 11.

Next, a specific example of the calculation of routes for E-n13k4 will be described. First, a case using 2W1H will exemplarily be described.

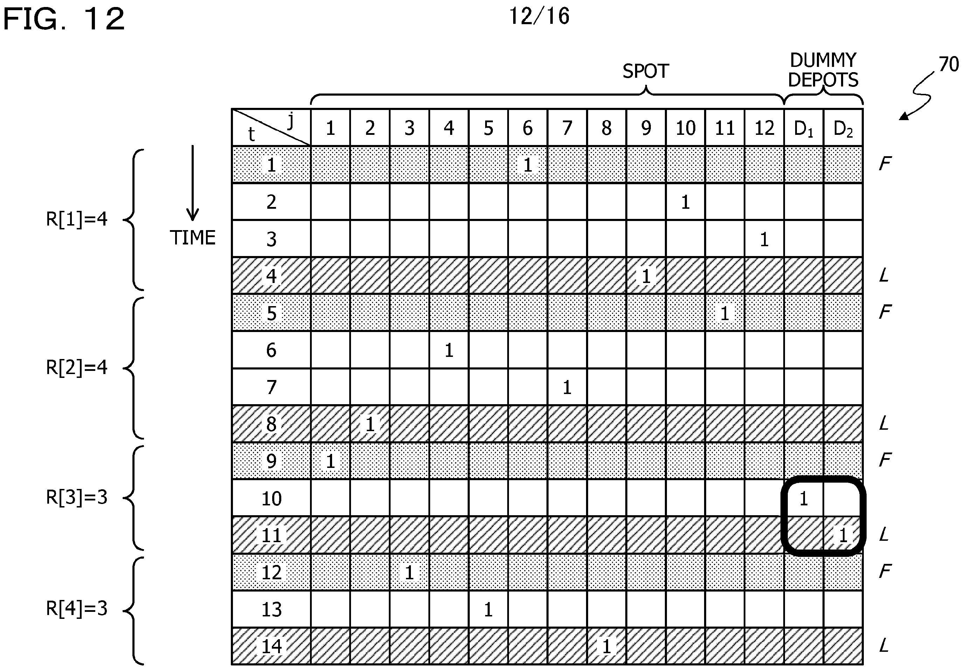

FIG. 12 is a diagram illustrating a route calculation example (part 1).

In a case where 2W1H is used in the optimization apparatus 200, the formulating unit 140 adjusts the number of state variables to be a value being a square of an integer by adding a state variable corresponding to a dummy depot.

The formulating unit 140 determines the number of dummy depots based on a pattern R determined in the method illustrated in FIGs. 8 to 11. The pattern R is represented by Expression (18).

$$R \equiv \{R[1], ..., R[k]\} \qquad (18)$$

k in Expression (18) is the number of all routes. A total of maximum numbers of spot nodes belonging to the pattern R is indicated by |R|. |R| is represented by Expression (19).

$$|R| \equiv \sum_{N=1}^{k} R[N] \qquad (19)$$

FIG. 12 exemplarily illustrates the example in FIG. 8, for example, the case with R[1] = 4, R[2] = 4, R[3] = 3, R[4] = 3. In this case, |R| = 14. A matrix 70 indicates a state variable string, for example, a bit string. One row of the matrix 70 corresponds to one time. One column of the matrix 70 corresponds to one node. One node corresponds to one spot node or one dummy depot.

The state variable string is represented by Expression (20).

$$\{x_{j,t}\}_{j \in I \cup D, t \in T} \qquad (20)$$

j is an index indicating a node. t is an index indicating a time. $x_{j,t}$ is "1" if a truck is at a node j at a time t and is "0" if not. The matrix 70 has "1" if $x_{j,t} = 1$ and a blank if $x_{j,t} = 0$ by omitting "0".

I is a set of spot nodes and is represented by Expression (21).

$$I \equiv \{1, 2, ..., n-1\} \qquad (21)$$

n is the number "13" of nodes given in E-n13k4. n-1 is the number of spot nodes.

D in Expression (20) is a set of dummy depots and is represented by Expression (22).

$$D \equiv \{D_1, D_2, ..., D_{|R|-n+1}\} \qquad (22)$$

|R|-n+1 is the number of dummy depots. T in Expression (20) is a set of times and is represented by Expression (23).

$$T \equiv \{1, 2, ..., |R|\} \qquad (23)$$

As described above, the formulating unit 140 handles a difference (|R|-n+1) between a total |R| of the maximum numbers of nodes belonging to a pattern and the number (n-1) of spot nodes as the number of dummy depots. Thus, the number of state variables is adjusted to acquire $|R|^2$. In the example in FIG. 12, the number of dummy depots is 14 - 12 = 2. The number of state variables is $14^2$ = 196. In the matrix 70, the state variable string is expressed by a square form having 14 rows and 14 columns. In this case, 2W1H (4 bit flips) in the optimization apparatus 200 is usable.

In the example of the matrix 70, t = 1 to 4 corresponds to the first route, for example, the first truck. t = 5 to 8 corresponds to the second route, for example, the second truck. t = 9 to 11 corresponds to the third route, for example, the third truck. t = 12 to 14 corresponds to the fourth route, for example, the fourth truck. This is also true for a case where one truck travels four routes by driving four times.

A row with a letter "F" indicates a time when a truck visits the spot next to the depot at the starting point in each route. A row with a letter "L" indicates one previous time of the time when the truck visits the depot at the end point in each route. Because it is known that the truck stays at the depot at the starting point and end point, the formulating unit 140 omits the state variables at the times corresponding to the starting point and end point of each route.

A row with F is represented by Expression (24). A row with L is represented by Expression (25).

$$F = \{S[0] + 1, ..., S[k - 1] + 1\} \qquad (24)$$

$$L = \{S[1], ..., S[k]\} \qquad (25)$$

S[l] (l = 0, 1, 2, ..., k) is represented by Expressions (26) and (27).

$$S[0] \equiv 0 \qquad (26)$$

$$S[l] \equiv \sum_{i=1}^{l} R[i] \qquad (l = 1, 2, ..., k) \qquad (27)$$

In this case, the formulating unit 140 formulates an objective function E(x,y) as in Expression (28).

$$E(x, y) = C(x) + P_1(x) + P_2(x, y) \qquad (28)$$

C(x) is a cost term indicating a total sum of costs. $P_1(x)$ is a constraint term indicating a constraint relating to a dummy depot. $P_2(x,y)$ is a constraint term indicating an inequality constraint of a slack variable y. The slack variable y is a binary variable taking a value of 0 or 1 and may be referred to as a slack bit. The slack variable y is used for converting the inequality constraint to an equality constraint. The formulating unit 140 uses the slack variable y to formulate a relationship between maximum carrying capacities of the trucks and the demand amounts of loads.

In the example of the matrix 70, 2W1H is usable. Thus, the formulating unit 140 may not include the constraint term corresponding to 1-Hot constraint in the objective function.

The cost term C(x) in Expression (28) is represented by Expression (29).

$$C(x) \equiv \sum_{\substack{i,j \\ \in I \cup D}} \sum_{t \in T \backslash L} c_{i,j} x_{i,t} x_{j,t+1} + \sum_{j \in I} \sum_{t \in F \cup L} c_{o,j} x_{j,t} \qquad (29)$$

$\{c_{i,j}\}$ (i, j∈I∪V) is a cost between nodes. $\{c_{i,j}\}$ includes a cost between spot nodes, a cost between a spot node and a dummy depot and a cost between dummy depots. All of the costs between one spot node and dummy depots are equal. The cost between dummy depots is 0. The index o is a representative index indicating a dummy depot and means the same as each of $D_1$, $D_2$, .... The backward slash mark indicates that elements of a set (such as L) on the right side of the backward slash mark are excluded from a set (such as T) on the left side of the backward slash mark.

The first term in the right side of the cost term C(x) is a total sum of costs between nodes. The first term indicates that a traveling cost $c_{ij}$ is taken between nodes i, j if the truck stays at the node i at a time t and stays at the other node j at the time t+1. The reason why times belonging to L are excluded is for suppressing traveling between nodes in different routes.

The second term in the right side of the cost term C(x) is a total sum of costs between nodes to be visited at times belonging to L and F in each route and the depot. Because the nodes to be visited at times belonging to L and F and the depot are coupled, the second term is a term that corrects the cost for it. Because partial bits are deleted by using the fact that it is known in advance that the truck stays at the depot as described above, the cost is corrected by the second term. Because of the deletion of the bits, not only unnecessary bits but also the constraint term are deleted.

The constraint term $P_1(x)$ in Expression (28) is represented by Expression (30).

$$P_1(\boldsymbol{x}) \equiv A \sum_{j \in D} \sum_{t \in T \backslash L} x_{j,t} \left( 1 - \sum_{k \in D \backslash \{j\}} x_{k,t+1} \right) \qquad (30)$$

A in Expression (30) is a constant that is given in advance.

The constraint term $P_1(x)$ indicates a constraint that, after a truck enters one dummy depot once within one route, the truck visits another dummy depot within the route. For example, in the example of the matrix 70, traveling between the dummy depots $D_1$ and $D_2$ occurs at t=10, 11 within the route corresponding to R[3]. Without the constraint term $P_1(x)$, there is a possibility that a truck returns to the depot once and travels to a spot again within one route. This corresponds to an increase of the number of routes. A solution with an increased number of routes is not a solution to be acquired. In the optimization apparatus 200, because of the constraint term $P_1(x)$, generation of a state that is not a solution to be acquired may be suppressed, and the efficiency of the solution search may be increased. The constant A in Expression (30) is given in advance. The constraint term $P_1(x)$ is an example of the constraint term 32 of the first embodiment.

A constraint term $P_2(x,y)$ is represented by Expression (31).

$$P_2(\boldsymbol{x},\boldsymbol{y}) \equiv B \sum_{l=1}^{k} \left( Q - \sum_{j \in I} \sum_{t=S[l-1]+1}^{S[l]} d_j x_{j,t} - y_l \right)^2 \qquad (31)$$

B in Expression (31) is a constant that is given in advance.

The constraint term $P_2(x,y)$ is a constraint representing a constraint on the carrying capacity of a truck by using a slack variable $y_l$. The total number of the slack variables $y_l$ is equal to the total number k of routes. The truck carrying-capacity constraint is an inequality constraint. The constraint term $P_2(x,y)$ is a constraint that the total of demand amounts in each route l (l = 1, ..., k) is equal to or lower than Q. In the example in FIG. 12, the terms for four routes are added as penalty.

The formulating unit 140 acquires a sum of all terms in Expressions (29), (30), and (31) and then inputs the result to the optimization apparatus 200 by handling $\{W_{ij}\}$ as an off-diagonal component and $\{b_i\}$ as a diagonal component. Because Expression (31) includes slack variables, the objective function includes slack variables in addition to state variables. In this way, the objective function may include a slack variable.

The matrix 70 represents a solution calculated by the optimization apparatus 200. The solution represented by the matrix 70 is an optimum solution for the problem example in FIG. 8. The solution represented by the matrix 70 indicates a route as follows. In the following description, "->" indicates that a truck travels from a node on the left side of "->" to a node on the right side of "- >". A spot is indicated by an index of a spot node in the matrix 70.

A first route is depot -> 6 -> 10 -> 12 -> 9 -> depot.

A second route is depot -> 11 -> 4 -> 7 -> 2 -> depot.

A third route is depot -> 1 -> dummy depot -> dummy depot -> depot, which corresponds to depot -> 1 -> depot. Solution interpretation that, if the truck returns to a dummy depot in the middle of the route, the truck reaches the end point of the route is performed by the route calculating unit 150.

A fourth route is depot -> 3 -> 5 -> 8 -> depot.

In the objective function in Expression (29), if the cost between nodes satisfies triangle inequality, the formulating unit 140 may determine as A = 0, for example, the constraint term $P_1(x) = 0$. A distance in a mathematical sense is an example of the cost satisfying triangle inequality. If the cost between nodes does not satisfy triangle inequality, $A \neq 0$ is determined. This is because a solution "a truck returns to the depot once and goes to a spot again within one route" occurs as a violation solution.

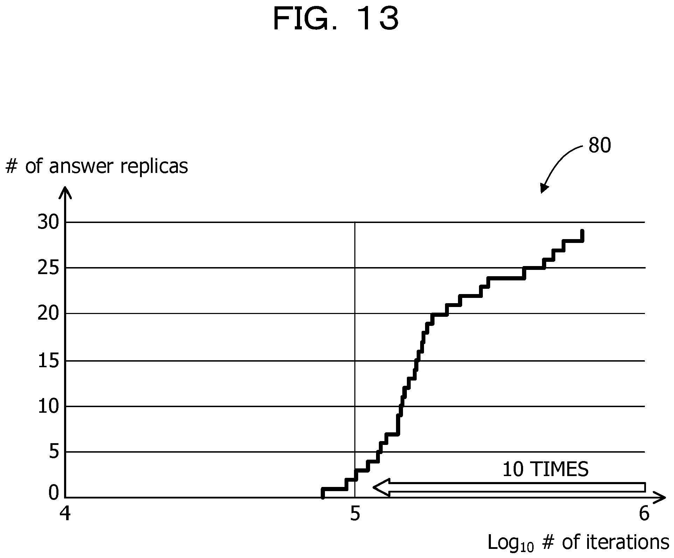

FIG. 13 is a diagram illustrating a first example of a relationship between the number of iterations and the number of correct answer replicas.

A graph 80 illustrates a relationship between the number of iterations in a case where replica exchange method and 2W1H are used in the optimization apparatus 200 and the number of replicas reaching an optimum solution for E-n13k4. In order to acquire the relationship, one for which the optimum solution in FIG. 12 is known in advance is used as E-n13k4. A replica that has reached an optimum solution is referred to as a correct answer replica. One iteration corresponds to bit flips for one operation. In 2W1H, the bit flips for one operation are four bit flips. The total number of replicas to be used for solution search is equal to 30.

The graph 80 has a horizontal axis indicating a common logarithm of the number of iterations in the solution search. The graph 80 has a vertical axis indicating the number of correct answer replicas. When 2W1H is used, a correct answer replica appears with the number of iterations around $10^5$.

On the other hand, in the existing method in which solution search is performed with 1 bit flip without using 2W1H, a correct answer replica appears with the number of iterations around $10^6$ in a case where, for example, solution search is performed on a pattern (4, 4, 3, 1) for which existence of an optimum solution is known. Therefore, by using 2W1H, the speed of the arithmetic operation may be increased about 10 times.

Because which pattern of a plurality of patterns has an optimum solution is not known for a new problem, all of the plurality of patterns is to be solved in the existing method. On the other hand, according to the information processing apparatus 100, for example, because one pattern containing the plurality of patterns such as the pattern (4, 4, 3, 3) is to be solved by the optimization apparatus 200, the number of executions of solving by the optimization apparatus 200 may be reduced.

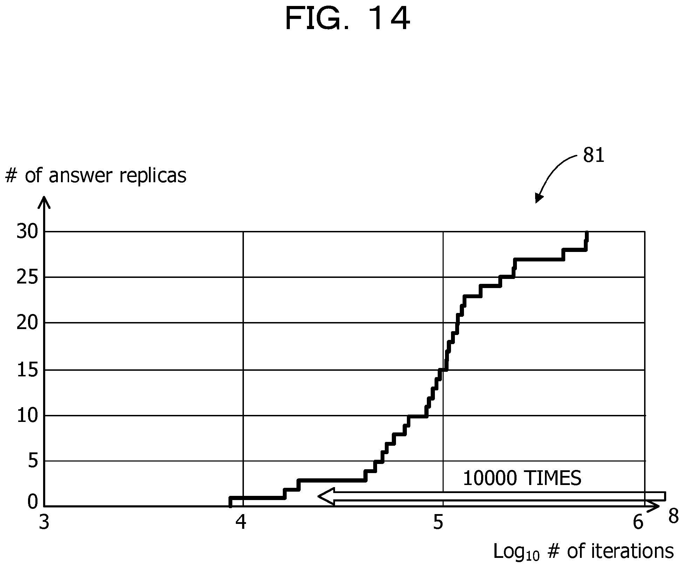

FIG. 14 is a diagram illustrating a second example of the relationship between the number of iterations and the number of correct answer replicas.

A graph 81 illustrates a relationship between the number of iterations in a case where replica exchange method and 2W1H are used in the optimization apparatus 200 and the number of correct answer replicas for En22k4. In order to acquire the relationship, one for which the optimum solution is known in advance is used as E-n22k4. The total number of replicas to be used for solution search is equal to 30.

The graph 81 has a horizontal axis indicating a common logarithm of the number of iterations in the solution search. The graph 81 has a vertical axis indicating the number of correct answer replicas. When 2W1H is used, a correct answer replica appears with the number of iterations around $10^4$.

On the other hand, in the existing method in which solution search is performed with 1 bit flip without using 2W1H, a correct answer replica appears with the number of iterations around $10^8$ in a case where, for example, solution search is performed on a pattern for which existence of an optimum solution is known. Therefore, by using 2W1H, the speed of the arithmetic operation may be increased about 10000 times.

Because which pattern of a plurality of patterns has an optimum solution is not known for a new problem, all of the plurality of patterns is to be solved in the existing method. On the other hand, according to the information processing apparatus 100, for example, because one pattern containing the plurality of patterns is to be solved by the optimization apparatus 200, the number of executions of solving by the optimization apparatus 200 may be reduced.

Next, another example of the calculation of routes for E-n13k4 will be described. In the example, 1W1H (2 bit flips) or 1 bit flip is used.

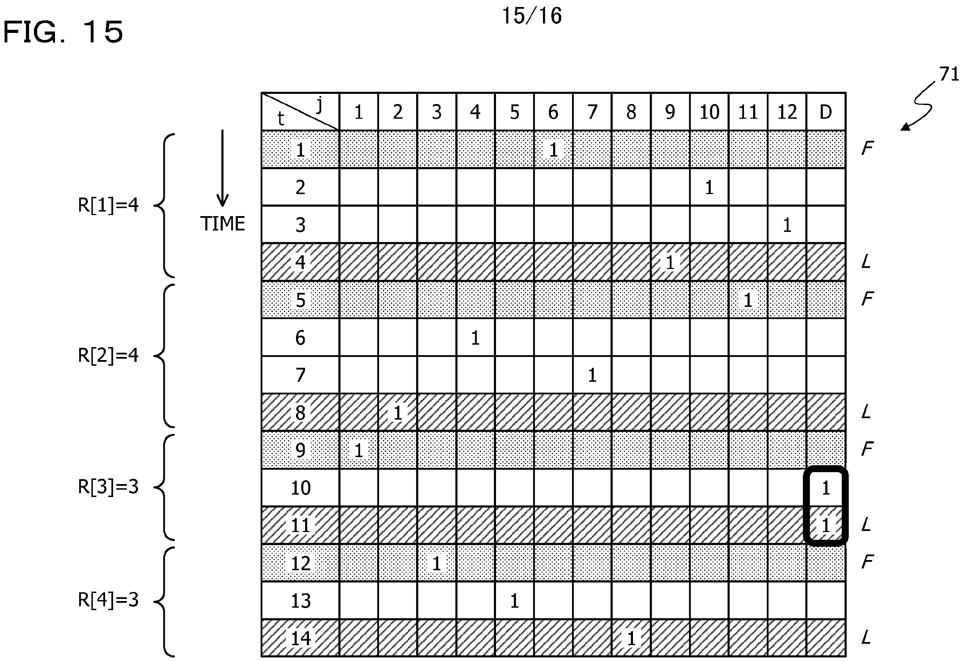

FIG. 15 is a diagram illustrating a route calculation example (part 2).

FIG. 15 exemplarily illustrates the example in FIG. 8, for example, the case with R[1] = 4, R[2] = 4, R[3] = 3, R[4] = 3. In this case, |R| = 14. A matrix 71 indicates a state variable string, for example, a bit string. One row of the matrix 71 corresponds to one time. One column of the matrix 71 corresponds to one node. One node corresponds to one spot node or one depot node. The number of state variables is |R| × (the number n of nodes), and, in the example of the matrix 71, is 14×13 = 182. FIG. 15 has "D" as a depot node.

The state variable string is represented by Expression (20). $x_{j,t}$ is "1" if a truck is at a node j at a time t and is "0" if not. The matrix 71 has "1" if $x_{j,t} = 1$ and a blank if $x_{j,t} = 0$ by omitting "0".

In a case where 1W1H is used, the formulating unit 140 formulates an objective function E(x,y) as in Expression (32).

$$E(\boldsymbol{x}, \boldsymbol{y}) = C(\boldsymbol{x}) + P_3(\boldsymbol{x}) + P_2(\boldsymbol{x}, \boldsymbol{y}) + P_4(\boldsymbol{x}) \qquad (32)$$

Expression (32) further has a constraint term $P_3(x)$ instead of the constraint term $P_1(x)$ in Expression (28). Expression (32) further has a constraint term $P_4(x)$ that does not exist in Expression (28). Because 1-Hot constraint that a truck visits one spot or the depot at each time is addressed by 1W1H in the optimization apparatus 200, the constraint term corresponding to 1-Hot constraint is not provided.

The constraint term $P_3(x)$ in Expression (32) is represented by Expression (33).

$$P_3(\boldsymbol{x}) \equiv A \sum_{t \in T \backslash L} x_{D,t}(1 - x_{D,t+1}) \qquad (33)$$

A in Expression (33) is a constant that is given in advance. The variable $x_{D,t}$ is a binary variable having a value "1" if a truck is at the depot at the time t and having a value "0" if not. The constraint term $P_3(x)$ is a constraint indicating that a truck continues to stay at the depot after the truck enters the depot once in one route. The constraint term $P_3(x)$ is an example of the constraint term 32 of the first embodiment.

The constraint term $P_4(x)$ in Expression (32) is represented by Expression (34).

$$P_4(\boldsymbol{x}) \equiv C \sum_{j \in I} \left(1 - \sum_{t \in T} x_{j,t}\right)^2 \\ + D \left(|R| - n + 1 - \sum_{t \in T} x_{D,t}\right)^2 \qquad (34)$$

C and D in Expression (34) are constants that are given in advance. The first term in the right side of Expression (34) indicates 1-Hot constraint relating to spots, for example, indicates that each spot is visited by a truck only once. The second term in the right side of Expression (34) is a constraint that the number of times of visiting of the depot is $(|R|-n+1)$. However, because the starting point and end point of each route is the depot and, in the example of the matrix 71, the bits corresponding to the starting point and end point of each route are removed, the number of times of visiting of the depot at the starting point and end point of each route is excluded. In the example in FIG. 15, $|R| - n + 1 = 14 - 13 + 1 = 2$.

The matrix 71 represents a solution calculated by the optimization apparatus 200. The solution represented by the matrix 71 is an optimum solution for the problem example in FIG. 8. The solution indicated in the matrix 71 is the same as that for the routes indicated in the matrix 70. The example of the matrix 71 has a solution that a truck continues to stay at the depot D at t=10, 11 within the route corresponding to R[3].

In a case where 1W1H is not used and search with 1 bit flip is performed, the formulating unit 140 formulates the objective function E(x,y) as in Expression (35).

$$E(\boldsymbol{x}, \boldsymbol{y}) = C(\boldsymbol{x}) + P_3(\boldsymbol{x}) + P_2(\boldsymbol{x}, \boldsymbol{y}) \\ + P_4(\boldsymbol{x}) + P_5(\boldsymbol{x}) \qquad (35)$$

Expression (35) further has a constraint term $P_5(x)$ for Expression (32). The constraint term $P_5(x)$ indicates a 1-Hot constraint that a truck visits one spot or the depot at each time.

The constraint term $P_5(x)$ in Expression (35) is represented by Expression (36).

$$P_5(\boldsymbol{x}) \equiv E \sum_{t \in T} \left(1 - \sum_{j \in I} x_{j,t} - x_{D,t}\right)^2 \qquad (36)$$

E in Expression (36) is a constant that is given in advance.

When the objective function E(x,y) is formulated as in Expression (35), the same solution as the solution indicated in the matrix 71 may be acquired. However, the solving performance is improved more when 1W1H is used than a case where 1W1H is not used. For example, the possibility that a better solution is reached is increased more when 1W1H is used than a case where 1W1H is not used. A solution may be acquired more quickly when 1W1H is used than a case where 1W1H is not used. The solving performance is improved more when 2W1H is used than a case where 1W1H is used.

Next, a comparison example of the processing procedure is described. The processing subject of the comparison example is the CPU 101.

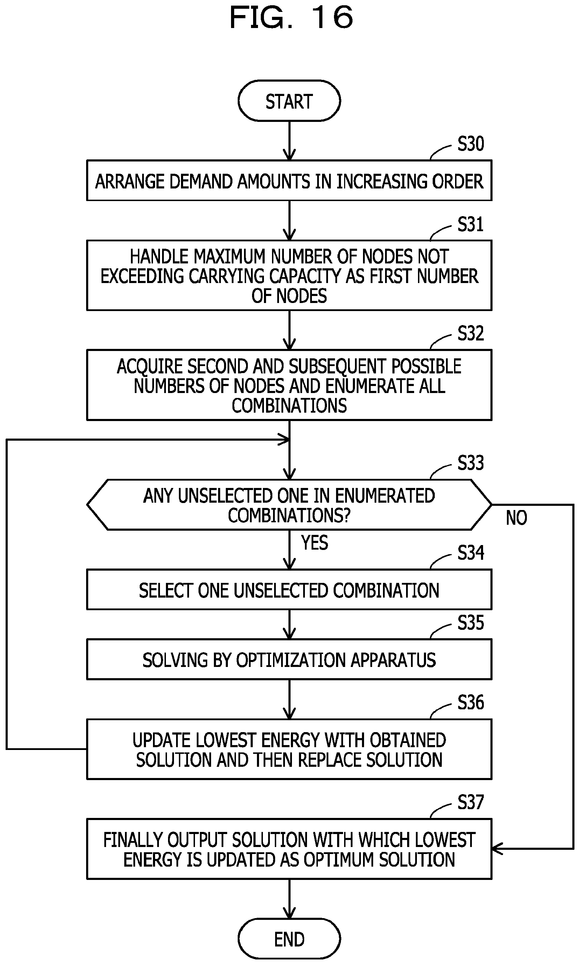

FIG. 16 is a flowchart illustrating the comparison example.

(S30) The CPU 101 arranges, in increasing order, the demand amounts of the spots included in the input instance information.

(S31) The CPU 101 handles the maximum number of spot nodes not exceeding the carrying capacity of a truck as the number of nodes of a first route.

(S32) The CPU 101 acquires the possible numbers of nodes for the second and subsequent routes and enumerates all combinations of the numbers of nodes for the routes. For example, for the problem of E-n13k4 in FIG. 8, the CPU 101 enumerates four combinations, for example, four patterns of (4, 4, 3, 1), (4, 4, 2, 2), (4, 3, 3, 2), and (3, 3, 3, 3).

(S33) The CPU 101 determines whether there is any unselected one in the enumerated combinations or not. If there is an unselected one, the CPU 101 advances the processing to step S34. If there is no unselected one, the CPU 101 advances the processing to step S37.

(S34) The CPU 101 selects one unselected combination from the enumerated combinations.

(S35) The CPU 101 generates information on an objective function for the unselected combination and outputs the information on the objective function to the optimization apparatus 200 so as to cause the optimization apparatus 200 to execute solving.

(S36) The CPU 101 obtains the solution acquired by the optimization apparatus 200, updates the lowest energy with the obtained solution and then replaces the solution held in the RAM 102 by the newly obtained solution. The CPU 101 advances the processing to step S33.

(S37) The CPU 101 finally outputs the solution with which the lowest energy is updated as an optimum solution.

In this manner, according to the method in which all of combinations of the possible numbers of nodes for routes are enumerated, objective functions the number of which is equal to the number of combinations are generated, and the solving by the optimization apparatus 200 is executed for each of the objective functions. For example, when the number of combinations is equal to N, N objective functions are generated, and the solving by the optimization apparatus 200 is executed N times.

On the other hand, according to the information processing apparatus 100, an objective function may be generated for one combination containing all combinations of the possible numbers of nodes for routes, and the optimization apparatus 200 may be caused to execute the solving on the objective functions. Therefore, the number of executions of the solving may be reduced to 1/N compared with the method in the comparison example. In this manner, the number of executions of the solving may be reduced.

The number of iterations of the solution search, for example, the number of bit flips for one execution of solving may be equal between the method in the comparison example and the second embodiment. According to the second embodiment, the number of iterations of the solution search may be reduced more than the method in the comparison example, and a solution may be acquired more quickly than the method in the comparison example.

Summarizing above, the information processing apparatus 100 has the following functions, for example. In the following description, m is an integer equal to or higher than 2.

The number-of-node calculating unit 130 allocates the first maximum number of spot nodes equal to the maximum number of spot nodes for acquired one route to a first route of a plurality of routes. The number-of-node calculating unit 130 allocates the m-th maximum number of spot nodes that is equal to or lower than the (m-1)th maximum number of spot nodes allocated to the (m-1)th route and higher than 0 to the m-th route of the plurality of routes. The number-of-node calculating unit 130 determines the number of state variables based on the plurality of maximum numbers of spot nodes allocated to the plurality of routes.

This allows determination of a pattern of maximum numbers of spot nodes for a plurality of routes so as to contain a plurality of patterns of the possible numbers of nodes for the plurality of routes and formulation of a problem for the determined pattern.

According to one example, the number-of-node calculating unit 130 acquires, as the maximum number of spot nodes to be allocated to one route, the maximum cumulative number of spot nodes having a cumulative demand amount not exceeding the capacity for demand amounts in the traveling entity. In this case, the cumulative demand amount is acquired by accumulating, in increasing order, a plurality of demand amounts corresponding to the plurality of spot nodes. The number-of-node calculating unit 130 handles the integer part of a quotient acquired by dividing the maximum cumulative number of spot nodes having a cumulative demand amount not exceeding the m times of the capacity by m as the m-th maximum number of spot nodes to be allocated to the m-th route.

Thus, the number of state variables may be suppressed to a lower number than a case where the method that uniformly allocates a maximum number of spot nodes to be allocated to one route to a plurality of routes or the method in FIG. 11 is used. As described above, as the number of state variables is reduced, unnecessary search in the optimization apparatus 200 may be suppressed.

In a case where the (m-1) times of the capacity for demand amounts of a traveling entity is equal to or higher than a total of a plurality of demand amounts, the number-of-node calculating unit 130 acquires a second number acquired by subtracting a first number of the m-th and subsequent remaining routes from a total number of the plurality of spot nodes. The number-of-node calculating unit 130 handles the integer part of the quotient acquired by dividing the second number by (m-1) as the (m-1)th maximum number of spot nodes to be allocated to the (m-1)th route.

Thus, the number of state variables may be suppressed to a lower number.

In another example, the number-of-node calculating unit 130 may acquire a plurality of patterns each being a pattern of the numbers of a plurality of possible spot nodes for a plurality of routes where a total of the plurality of spot nodes belonging to the pattern is equal to the total number of the plurality of spot nodes. The number-of-node calculating unit 130 may extract a maximum value of the number of spot nodes corresponding to each route from the acquired plurality of patterns and may handle the extracted maximum value for each route as the maximum number of spot nodes to be allocated to the route.

Thus, the number of state variables may be suppressed to a lower number than a case where the method that uniformly allocates a maximum number of spot nodes to be allocated to one route to a plurality of routes is used.

The number-of-node calculating unit 130 allows that a total of a plurality of maximum numbers of spot nodes to be allocated to a plurality of routes based on the acquired maximum number is higher than the total number of the plurality of spot nodes.

This allows determination of a pattern of maximum numbers of spot nodes for a plurality of routes so as to contain a plurality of patterns of the possible numbers of nodes for the plurality of routes and formulation of a problem for the determined pattern.

When 2W1H is usable in the optimization apparatus 200, for example, the searching unit 20, the formulating unit 140 adds a state variable corresponding to a dummy depot node such that the number of state variables is equal to the square of the total of the plurality of maximum numbers of spot nodes to be allocated to a plurality of routes.

Thus, in the optimization apparatus 200, solution search may be performed quickly with 2W1H.

In this case, the formulating unit 140 outputs identification information indicating a set of four state variables having values to be changed for one state transition to the optimization apparatus 200, for example, the searching unit 20. The identification information may be, for example, four labels for identifying four groups to which four state variables belong. In this case, because one state variable belongs to two groups in the row direction and the column direction as illustrated in FIG. 5, two labels corresponding to the two groups are given.

Thus, a set of state variables to undergo 4 bit flips with 2W1H may be properly instructed to the optimization apparatus 200, and the optimization apparatus 200 may be caused to properly perform solution search with 2W1H.

If the costs between two spot nodes and between a spot node and the depot node satisfy triangle inequality, the formulating unit 140 may set the constraint term $P_1$ to 0.

This may reduce the influence of the inclusion of the constraint term $P_1$ in the objective function $E(x,y)$ on the solution search.

The information processing according to the first embodiment may be realized by causing the processing unit 11 to execute a program. The information processing according to the second embodiment may be realized by causing the CPU 101 to execute a program. The program may be recorded in the recording medium 113 that is computer-readable. For example, it is possible to circulate the program by distributing the recording medium 113 in which the program is recorded. The program may be stored in another computer, and the program may be distributed through a network. For example, the computer may store (install), in a storage device such as the RAM 102 or the HDD 103, the program recorded in the recording medium 113 or the program received from the other computer and may read the program from the storage device to execute the program. In any of the above aspects, the various features may be implemented in hardware, or as software modules running on one or more processors/computers. The invention also provides a computer program or a computer program product comprising instructions which, when executed by a computer, cause the computer to carry out any of the methods/method steps described herein, and a non-transitory computer-readable medium comprising instructions which, when executed by a computer, cause the computer to carry out any of the methods/method steps described herein. A computer program embodying the invention may be stored on a non-transitory computer-readable medium, or it could, for example, be in the form of a signal such as a downloadable data signal provided from an Internet website, or it could be in any other form.

Reference Signs List

11:          processing unit
12:          output unit
20:          searching unit
30:          objective function
31:          cost term
32:          constraint term
R1, R2:      route
d1:          depot node
n1, n2...., n7:   spot node

**Claims**

1.  An information processing apparatus comprising:
    a processing unit configured to:

    acquire, for a combinatorial optimization problem for acquiring a plurality of routes to be used by a traveling entity to visit a plurality of spot nodes and having a depot node as a starting point and end point of each of the routes, a maximum number of spot nodes to be allocated to one route,
    determine the number of state variables to be used for formulating the combinatorial optimization problem based on the maximum number,
    generate, for the determined number of state variables, information on an objective function including a constraint term indicating that, after the traveling entity travels from the spot node to the depot node in each of the routes, traveling of the traveling entity to each of the plurality of spot nodes within the route is limited; and
    an output unit outputting the generated information on the objective function to a searching apparatus searching a ground state indicated by a set of the state variables included in the objective function.

2.  The information processing apparatus according to claim 1, wherein the processing unit is further configured to, allocate a first maximum number of spot nodes equal to the acquired maximum number to a first route of the plurality of routes and allocating an m-th (where m is an integer equal to or higher than 2) maximum number of spot nodes equal to or lower than an (m-1)th maximum number of spot nodes allocated to the (m-1)th route and higher than 0 to the m-th route of the plurality of routes, and
    determine the number of the state variables based on the plurality of maximum numbers of spot nodes allocated to the plurality of routes.

3.  The information processing apparatus according to claim 2, wherein the processing unit is further configured to, acquire, as the maximum number, a maximum cumulative number of spot nodes having a cumulative demand amount not exceeding a capacity for demand amounts in the traveling entity, wherein the cumulative demand amount is acquired by accumulating, in increasing order, a plurality of demand amounts corresponding to the plurality of spot nodes, and
    handle an integer part of a quotient, acquired by dividing the maximum cumulative number of spot nodes having a cumulative demand amount not exceeding the m times of the capacity by m, as the m-th maximum number of spot nodes to be allocated to the m-th route.

4.  The information processing apparatus according to claim 3, wherein
    when the (m-1) times of the capacity is equal to or higher than a total of the plurality of demand amounts, handle an integer part of a quotient, acquired by dividing a second number acquired by subtracting a first number of the m-th and subsequent remaining routes from a total number of the plurality of spot nodes by (m - 1), as the (m-1)th maximum number of spot nodes to be allocated to the (m-1)th route.

5.  The information processing apparatus according to any of the preceding claims, wherein the processing unit is further configured to,
    acquire a plurality of patterns each being a pattern of the numbers of a plurality of possible spot nodes for the plurality of routes where a total of the plurality of spot nodes belonging to the pattern is equal to the total number of the plurality of spot nodes,
extract a maximum value of the number of spot nodes corresponding to each of the routes from the plurality of patterns, and
handle the maximum value extracted for each of the routes as the maximum number of spot nodes to be allocated to the route.

6. The information processing apparatus according to claim 2 or any claim dependent thereon, wherein a total of the plurality of maximum numbers of spot nodes is larger than a total number of the plurality of spot nodes.

7. The information processing apparatus according to any of the preceding claims, wherein the processing unit is further configured to,
add a state variable corresponding to a dummy depot node such that a number of the state variables is equal to a square of the total of the plurality of maximum numbers of spot nodes to be allocated to the plurality of routes based on the maximum number.

8. The information processing apparatus according to claim 7, wherein the output unit outputs identification information indicating a set of the four state variables having values to be changed for one state transition to the searching apparatus.

9. The information processing apparatus according to any of the preceding claims, wherein the processing unit is further configured to,
set the constraint term to 0, when costs between the two spot nodes and between the spot node and the depot node satisfy triangle inequality.

10. An information processing program causing a computer to perform a process comprising:

   acquiring, for a combinatorial optimization problem for acquiring a plurality of routes to be used by a traveling entity to visit a plurality of spot nodes and having a depot node as a starting point and end point of each of the routes, a maximum number of spot nodes to be allocated to one route,
   determining the number of state variables to be used for formulating the combinatorial optimization problem based on the maximum number,
   generating, for the determined number of state variables, information on an objective function including a constraint term indicating that, after the traveling entity travels from the spot node to the depot node in each of the routes, traveling of the traveling entity to each of the plurality of spot nodes within the route is limited; and
   outputting the generated information on the objective function to a searching apparatus searching a ground state indicated by a set of the state variables included in the objective function.

11. An information processing system comprising: an information processing apparatus and a searching apparatus, wherein
the information processing apparatus is configured to:

   acquire, for a combinatorial optimization problem for acquiring a plurality of routes to be used by a traveling entity to visit a plurality of spot nodes and having a depot node as a starting point and end point of each of the routes, a maximum number of spot nodes to be allocated to one route,
   determine the number of state variables to be used for formulating the combinatorial optimization problem based on the maximum number,
   generate, for the determined number of state variables, information on an objective function including a constraint term indicating that, after the traveling entity travels from the spot node to the depot node in each of the routes, traveling of the traveling entity to each of the plurality of spot nodes within the route is limited; and
   output the generated information on the objective function,
   and
   the searching apparatus is configured to search a ground state indicated by a set of the state variables included in the objective function received from the information processing apparatus.

# FIG. 1

# FIG. 2

INFORMATION PROCESSING SYSTEM    50

INFORMATION PROCESSING APPARATUS    100

| PROCESSOR 101 | IMAGE SIGNAL PROCESSING UNIT 105 | 111 |
| RAM 102 | INPUT SIGNAL PROCESSING UNIT 106 | 112 |
| HDD 103 | MEDIUM READER 107 | 113 |
| IO INTERFACE 104 | NIC 108 | NETWORK 300 |

OPTIMIZATION APPARATUS    200

# FIG. 3

# FIG. 4

INFORMATION PROCESSING APPARATUS — 100

NUMBER-OF-NODE CALCULATING UNIT — 130

STORAGE UNIT — 120

FORMULATING UNIT — 140

ROUTE CALCULATING UNIT — 150

OPTIMIZATION APPARATUS — 200

# FIG. 5

# FIG. 6

START

S10

ARRANGE DEMAND AMOUNTS IN INCREASING ORDER

S11

HANDLE MAXIMUM NUMBER OF SPOT NODES NOT EXCEEDING CARRYING CAPACITY AS MAXIMUM NUMBER OF SPOT NODE OF FIRST ROUTE

S12

HANDLE QUOTIENT ACQUIRED BY DIVIDING MAXIMUM CUMULATIVE NUMBER j OF SPOTS HAVING CUMULATIVE DEMAND AMOUNT NOT EXCEEDING NQ BY N AS MAXIMUM NUMBER OF SPOT NODES OF THE N-TH ROUTE

S13

FORMULATE WITH ACQUIRED PATTERN

S14

SOLUTION SEARCH BY OPTIMIZATION APPARATUS

END

# FIG. 7

START

S20
ARRANGE DEMAND AMOUNTS IN INCREASING ORDER

S21
HANDLE MAXIMUM NUMBER OF SPOT NODES NOT EXCEEDING CARRYING CAPACITY AS MAXIMUM NUMBER OF SPOT NODE OF FIRST ROUTE

S22
HANDLE QUOTIENT ACQUIRED BY DIVIDING MAXIMUM CUMULATIVE NUMBER j OF SPOTS HAVING CUMULATIVE DEMAND AMOUNT NOT EXCEEDING NQ BY N AS MAXIMUM NUMBER OF SPOT NODES OF THE N-TH ROUTE

S23
PROVIDE, AS A BIT, AN ADDITIONAL DUMMY DEPOT IN ACCORDANCE WITH MAXIMUM NUMBER OF SPOT NODES OF EACH ROUTE

S24
FORMULATE IN CONSIDERATION OF CONSTRAINT BETWEEN DUMMY DEPOTS

S25
SOLUTION SEARCH BY OPTIMIZATION APPARATUS

END

# FIG. 8

MAXIMUM CARRYING CAPACITY Q = 6000

121

| SPOT | DEMAND AMOUNT | CUMULATIVE DEMAND AMOUNT |
|---|---|---|
| 1 | 1100 | 1100 |
| 2 | 1200 | 2300 |
| 3 | 1200 | 3500 |
| (4) | 1400 | 4900 |
| 5 | 1400 | 6300 |
| 6 | 1500 | 7800 |
| 7 | 1600 | 9400 |
| (8) | 1700 | 11100 |
| 9 | 1700 | 12800 |
| 10 | 1700 | 14500 |
| (11) | 1800 | 16300 |
| (12) | 1900 | 18200 |

R[1]=4

R[2]=⌊8/2⌋=4

R[3]=⌊11/3⌋=3

R[4]=⌊12/4⌋=3

# FIG. 9

MAXIMUM CARRYING CAPACITY Q = 5000

| SPOT | DEMAND AMOUNT | CUMULATIVE DEMAND AMOUNT |
|------|---------------|--------------------------|
| 1 | 1100 | 1100 |
| 2 | 1200 | 2300 |
| 3 | 1200 | 3500 |
| 4 | 1400 | 4900 |
| 5 | 1400 | 6300 |
| 6 | 1500 | 7800 |
| 7 | 1600 | 9400 |
| 8 | 1700 | 11100 |
| 9 | 1700 | 12800 |
| 10 | 1700 | 14500 |
| 11 | 1800 | 16300 |
| 12 | 1900 | 18200 |

121

$R[1]=4$

$R[2]=\lfloor 7/2 \rfloor =3$

$R[3]=\lfloor 10/3 \rfloor =3$

$R[4]=\lfloor 12/4 \rfloor =3$

# FIG. 10

MAXIMUM CARRYING CAPACITY Q = 7000

121

| SPOT | DEMAND AMOUNT | CUMULATIVE DEMAND AMOUNT |
|------|---------------|--------------------------|
| 1 | 1100 | 1100 |
| 2 | 1200 | 2300 |
| 3 | 1200 | 3500 |
| 4 | 1400 | 4900 |
| 5 | 1400 | 6300 |
| 6 | 1500 | 7800 |
| 7 | 1600 | 9400 |
| 8 | 1700 | 11100 |
| 9 | 1700 | 12800 |
| 10 | 1700 | 14500 |
| 11 | 1800 | 16300 |
| 12 | 1900 | 18200 |

$R[1]=5$

$R[2]=\lfloor 9/2 \rfloor =4$

$R[3]=\lfloor 11/3 \rfloor =3$

$R[4]=\lfloor 12/4 \rfloor =3$

# FIG. 11

EXAMPLE OF POSSIBLE
PATTERNS OF THE NUMBERS
OF SPOT NODES FOR E-n13k4

( 4 , 4 , 3 , 1 )

( 4 , 4 , 2 , 2 )

( 4 , 3 , 3 , 2 )

( 3 , 3 , 3 , 3 )

EXTRACT MAXIMUM
VALUE OF EACH
ROUTE

PATTERN OF MAXIMUM
NUMBERS OF SPOT
NODES

( 4 , 4 , 3 , 3 )

12/16

FIG. 12

# FIG. 13

# of answer replicas

Log$_{10}$ # of iterations

80

10 TIMES

# FIG. 14

# FIG. 15

EP 3 862 936 A1

| t \ j | 1 | 2 | 3 | 4 | 5 | 6 | 7 | 8 | 9 | 10 | 11 | 12 | D | |
|-------|---|---|---|---|---|---|---|---|---|----|----|----|---|---|
| 1 | | | | | | 1 | | | | | | | | F |
| 2 | | | | | | | | | | 1 | | | | |
| 3 | | | | | | | | | | | | 1 | | |
| 4 | | | | | | | | | | 1 | | | | L |
| 5 | | | | | | | | | | | 1 | | | F |
| 6 | | | 1 | | | | | | | | | | | |
| 7 | | | | | | | 1 | | | | | | | |
| 8 | | 1 | | | | | | | | | | | | L |
| 9 | 1 | | | | | | | | | | | | | F |
| 10 | | | | | | | | | | | | | 1 | |
| 11 | | | | | | | | | | | | | 1 | L |
| 12 | | | 1 | | | | | | | | | | | F |
| 13 | | | | | 1 | | | | | | | | | |
| 14 | | | | | | | | | 1 | | | | | L |

R[1]=4
R[2]=4
R[3]=3
R[4]=3

TIME

71

# FIG. 16

```
        ( START )
            |
            v
```
S30

ARRANGE DEMAND AMOUNTS IN INCREASING ORDER

S31

HANDLE MAXIMUM NUMBER OF NODES NOT EXCEEDING CARRYING CAPACITY AS FIRST NUMBER OF NODES

S32

ACQUIRE SECOND AND SUBSEQUENT POSSIBLE NUMBERS OF NODES AND ENUMERATE ALL COMBINATIONS

S33

ANY UNSELECTED ONE IN ENUMERATED COMBINATIONS?    NO

YES

S34

SELECT ONE UNSELECTED COMBINATION

S35

SOLVING BY OPTIMIZATION APPARATUS

S36

UPDATE LOWEST ENERGY WITH OBTAINED SOLUTION AND THEN REPLACE SOLUTION

S37

FINALLY OUTPUT SOLUTION WITH WHICH LOWEST ENERGY IS UPDATED AS OPTIMUM SOLUTION

```
        ( END )
```

Europäisches
Patentamt

European
Patent Office

Office européen
des brevets

## EUROPEAN SEARCH REPORT

Application Number

EP 20 21 4957

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2016/148136 A1 (NI BOYI [CN] ET AL) 26 May 2016 (2016-05-26) * paragraphs [0020] - [0036]; figures 1-6 * | 1-11 | INV. G06Q10/04 |

-----

TECHNICAL FIELDS
SEARCHED (IPC)

G06Q

The present search report has been drawn up for all claims

| Place of search | Date of completion of the search | Examiner |
|---|---|---|
| Munich | 29 April 2021 | Bîrlescu, V |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons
.............................................................................................
& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 20 21 4957

This annex lists the patent family members relating to the patent documents cited in the above-mentioned European search report.
The members are as contained in the European Patent Office EDP file on
The European Patent Office is in no way liable for these particulars which are merely given for the purpose of information.

29-04-2021

| Patent document cited in search report | Publication date | Patent family member(s) | Publication date |
|---|---|---|---|
| US 2016148136 A1 | 26-05-2016 | CN 105631530 A<br>US 2016148136 A1 | 01-06-2016<br>26-05-2016 |

EPO FORM P0459

For more details about this annex : see Official Journal of the European Patent Office, No. 12/82

**REFERENCES CITED IN THE DESCRIPTION**

**Patent documents cited in the description**

- JP 7175504 A
- JP 2007241340 A
- JP 2004272615 A